# EUROPEAN PATENT APPLICATION

(11) **EP 4 701 321 A1**
(43) Date of publication of application: **25.02.2026**
(21) Application number: 24802841.7
(22) Date of filing: 29.04.2024
(51) Int. Cl.: H04W 76/10, H04W 28/02, H04W 28/24

(54) **COMMUNICATION METHOD AND APPARATUS, AND COMPUTER-READABLE STORAGE MEDIUM**

(30) Priority: 11.05.2023 CN 202310532578; 28.09.2023 CN 202311286413
(71) Applicant: Huawei Technologies Co., Ltd., Shenzhen, Guangdong 518129 (CN)
(72) Inventor: HAN, Zhilin, Shenzhen, Guangdong 518129 (CN); XU, Yishan, Shenzhen, Guangdong 518129 (CN)
(74) Representative: Isarpatent
(86) International application number: PCT/CN2024/090626
(87) International publication number: WO 2024/230558

(57) **Abstract**

This application provides a communication method and apparatus, and a computer-readable storage medium. The method includes: obtaining subscription data of a first device; and determining a target maximum bit rate of a second device based on the subscription data of the first device. According to the technical solutions provided in this application, session establishment accuracy can be improved.

## Description

This application claims priorities to Chinese Patent Application No. 202310532578.0, filed with the China National Intellectual Property Administration on May 11, 2023 and entitled "COMMUNICATION METHOD AND APPARATUS, AND COMPUTER-READABLE STORAGE MEDIUM" and to Chinese Patent Application No. 202311286413.6, filed with the China National Intellectual Property Administration on September 28, 2023 and entitled "COMMUNICATION METHOD AND APPARATUS, AND COMPUTER-READABLE STORAGE MEDIUM", both of which are incorporated herein by reference in their entireties.

### TECHNICAL FIELD

This application relates to the field of wireless communication technologies, and in particular, to a communication method and apparatus, and a computer-readable storage medium.

### BACKGROUND

An authenticable non-3rd generation partnership project (authenticable non-3rd generation partnership project, AUN3) may be connected to a core network via a mobile network residential gateway, such as a 5th-generation mobile network residential gateway (5th generation mobile network residential gateway, 5G-RG). The AUN3 may further transmit data by using a packet data unit (packet data unit, PDU) session established by the 5G-RG for the AUN3.

Subscription data of the 5G-RG is independent of that of the AUN3. Since one 5G-RG may be connected to a plurality of AUN3 devices, and there is no binding relationship between the AUN3 devices and the 5G-RG. Therefore, it is possible that a session aggregate maximum bit rate (aggregate maximum bite rate, AMBR) in the AUN3 subscription may exceed a session establishment capability of the 5G-RG, resulting in no data being transmitted after the AUN3 session establishment.

### SUMMARY

Embodiments of this application provide a communication method and a related apparatus, to improve session establishment accuracy.

According to a first aspect, this application provides a communication method. The method may be applied to a policy control function network element, or may be applied to an apparatus (for example, a chip, a chip system, or a circuit) in the policy control function network element or an apparatus that can be used together with the policy control function network element. It may be understood that, alternatively, the method may be applied to a session management function network element, or may be applied to an apparatus (for example, a chip, a chip system, or a circuit) in the session management function network element or an apparatus that can be used together with the session management function network element. It may be understood that, alternatively, the method may be applied to an access and mobility management function network element, or may be applied to an apparatus (for example, a chip, a chip system, or a circuit) in the access and mobility management function network element or an apparatus that can be used together with the access and mobility management function network element. The method may include: obtaining subscription data of a first device; and determining a target maximum bit rate of a second device based on the subscription data of the first device.

In the solution provided in this application, the subscription data of the first device may be obtained, and the target maximum bit rate of the second device may be determined based on the subscription data of the first device. Because the second device accesses a core network via the first device, the target maximum bit rate of the second device is related to the subscription data of the first device. Therefore, a proper first maximum bit rate may be determined for the second device based on the subscription data of the first device, so that the target maximum bit rate of the second device does not exceed a first maximum bit rate of the first device, thereby standardizing session establishment. This can avoid a problem that data cannot be transmitted after a session is established for the second device, thereby improving session establishment accuracy.

In a possible implementation, the obtaining the subscription data of the first device includes: obtaining the subscription data of the first device from a first core network element.

In a possible implementation, the obtaining the subscription data of the first device includes: obtaining a subscription permanent identifier (subscription permanent identifier, SUPI) of the first device; and obtaining the subscription data of the first device from a second core network element based on the SUPI of the first device.

In a possible implementation, the first maximum bit rate is a session maximum bit rate, and the obtaining the SUPI of the first device includes: receiving a first request from a first core network element, where the first request includes the SUPI of the first device.

In a possible implementation, the first maximum bit rate is a user equipment maximum bit rate, and the obtaining the SUPI of the first device includes: receiving a second request from a third core network element, where the second request is for requesting to determine the target maximum bit rate of the second device, and the second request includes the SUPI of the first device.

In a possible implementation, the first maximum bit rate is a user equipment maximum bit rate, and the obtaining the SUPI of the first device includes: receiving a SUPI of the second device; and obtaining the SUPI of the first device based on a correspondence between the second device and the first device.

In the solution provided in this application, the access and mobility management function network element may obtain the correspondence between the second device and the first device, and determine the SUPI of the first device based on the correspondence and the SUPI of the second device. The correspondence between the second device and the first device may be locally maintained by the access and mobility management function network element, or may be obtained by the access and mobility management function network element from a data storage network element.

In a possible implementation, the subscription data of the first device includes a first maximum bit rate of the first device, and the method further includes: obtaining a second maximum bit rate of the second device from the first core network element; and the determining the target maximum bit rate of the second device based on the subscription data of the first device includes: determining a smaller value between the second maximum bit rate of the second device and the first maximum bit rate of the first device as the target maximum bit rate of the second device.

In the solution provided in this application, the smaller value between the second maximum bit rate of the second device and the first maximum bit rate of the first device is determined as the target maximum bit rate of the second device, so that the target maximum bit rate of the second device does not exceed the first maximum bit rate of the first device, thereby standardizing session establishment. This can avoid a problem that data cannot be transmitted after a session is established for the second device, thereby improving session establishment accuracy.

In a possible implementation, the first request or the second request further includes a SUPI of the second device, and the method further includes: obtaining subscription data of the second device based on the SUPI of the second device, where the subscription data of the second device includes a second maximum bit rate of the second device, where the subscription data of the first device includes a first maximum bit rate of the first device; and the determining the target maximum bit rate of the second device based on the subscription data of the first device includes: determining a smaller value between the second maximum bit rate of the second device and the first maximum bit rate of the first device as the target maximum bit rate of the second device.

**In** a possible implementation, the subscription data of the first device includes a default second maximum bit rate of the second device, and the default second maximum bit rate of the second device indicates a second maximum bit rate that can be used by the second device; and the determining the target maximum bit rate of the second device based on the subscription data of the first device includes: using the default second maximum bit rate of the second device as the target maximum bit rate of the second device.

**In** the solution provided in this application, the default second maximum bit rate of the second device in the subscription data of the first device is used as the target maximum bit rate of the second device, so that the target maximum bit rate of the second device does not exceed the first maximum bit rate of the first device, thereby standardizing session establishment. This can avoid a problem that data cannot be transmitted after a session is established for the second device, thereby improving session establishment accuracy.

**In** a possible implementation, the first core network element is a session management function network element.

**In** a possible implementation, the second core network element is a data storage network element.

**In** a possible implementation, the third core network element is an access and mobility management function network element.

**In** a possible implementation, the first request further includes indication information, and the indication information indicates a fourth core network element to determine the target maximum bit rate of the second device.

In a possible implementation, the fourth core network element is a policy control function network element.

In a possible implementation, the method further includes: sending the target maximum bit rate of the second device.

According to a second aspect, this application provides a communication method. The method may be applied to an access and mobility management function network element, or may be applied to an apparatus (for example, a chip, a chip system, or a circuit) in the access and mobility management function network element or an apparatus that can be used together with the access and mobility management function network element. The following uses an example in which the method is applied to the access and mobility management function network element for description. The method includes: An access and mobility management function network element obtains a SUPI of a second device; determines a SUPI of a first device based on a correspondence between the second device and the first device; and sends the SUPI of the first device.

In the solution provided in this application, the access and mobility management function network element may obtain the correspondence between the second device and the first device, and determine the SUPI of the first device based on the correspondence and the SUPI of the second device. The correspondence between the second device and the first device may be locally maintained by the access and mobility management function network element, or may be obtained by the access and mobility management function network element from a data storage network element. The access and mobility management function network element determines and sends the SUPI of the first device, so that subscription data of the first device can be obtained based on the SUPI of the first device, and a target maximum bit rate of the second device can be determined based on the subscription data of the first device. The target maximum bit rate of the second device is related to the subscription data of the first device. Therefore, a proper first maximum bit rate may be determined for the second device based on the subscription data of the first device, so that the target maximum bit rate of the second device does not exceed a first maximum bit rate of the first device, thereby standardizing session establishment. This can avoid a problem that data cannot be transmitted after a session is established for the second device, thereby improving session establishment accuracy.

It should be understood that, the communication method according to the second aspect corresponds to the communication method according to the first aspect, and specific content corresponds to content in the first aspect. For corresponding features of the second aspect and beneficial effects achieved, refer to descriptions of the first aspect. To avoid repetition, detailed descriptions are appropriately omitted herein.

In a possible implementation, obtaining the SUPI of the second device includes: receiving a first session establishment request from the first device, where the first session establishment request includes the SUPI of the second device.

In a possible implementation, the sending the SUPI of the first device includes: sending a second session establishment request to a first core network element, where the second session establishment request includes the SUPI of the first device and the SUPI of the second device.

In a possible implementation, the sending the SUPI of the first device includes: sending a second request to a fourth core network element, where the second request is for requesting to determine a target maximum bit rate of the second device, the second request includes the SUPI of the first device, and the first maximum bit rate is a user equipment maximum bit rate.

In a possible implementation, the second session establishment request further includes indication information, the indication information indicates a fourth core network element to determine a target maximum bit rate of the second device, and the first maximum bit rate is a session maximum bit rate.

In a possible implementation, the first core network element is a session management function network element.

In a possible implementation, the fourth core network element is a policy control function network element.

In a possible implementation, the method further includes: receiving the target maximum bit rate of the second device.

In a possible implementation, the method further includes: receiving a deregistration request of the first device; and deregistering, based on the deregistration request of the first device, the second device corresponding to the first device.

In a possible implementation, the method further includes: deleting the correspondence between the second device and the first device.

According to a third aspect, this application provides a communication method. The method may be applied to a core network element, or may be applied to an apparatus (for example, a chip, a chip system, or a circuit) in the core network element or an apparatus that can be used together with the core network element. The following uses an example in which the method is applied to the core network element for description. The core network element may include a session management function network element, a policy control function network element, an access and mobility management function network element, a data storage network element, and the like. The method may include: A session management function network element sends subscription data of a first device to a policy control function network element; and the policy control function network element determines a target maximum bit rate of a second device based on the subscription data of the first device.

In the solution provided in this application, the policy control function network element may obtain the subscription data of the first device from the session management function network element, and determine the target maximum bit rate of the second device based on the subscription data of the first device. Because the second device accesses a core network via the first device, the target maximum bit rate of the second device is related to the subscription data of the first device. Therefore, a proper first maximum bit rate may be determined for the second device based on the subscription data of the first device, so that the target maximum bit rate of the second device does not exceed a first maximum bit rate of the first device, thereby standardizing session establishment. This can avoid a problem that data cannot be transmitted after a session is established for the second device, thereby improving session establishment accuracy.

It should be understood that, the communication method according to the third aspect corresponds to the communication methods according to the first aspect and the second aspect, and specific content corresponds to content in the first aspect and the second aspect. For corresponding features of the third aspect and beneficial effects achieved, refer to descriptions of the first aspect and the second aspect. To avoid repetition, detailed descriptions are appropriately omitted herein.

In a possible implementation, the target maximum bit rate is a session maximum bit rate.

In a possible implementation, the subscription data of the first device includes a default second maximum bit rate of the second device, and the default second maximum bit rate of the second device indicates a second maximum bit rate that can be used by the second device; and That the policy control function network element determines the target maximum bit rate of the second device based on the subscription data of the first device includes: The policy control function network element uses the default second maximum bit rate of the second device as the target maximum bit rate of the second device.

In a possible implementation, the subscription data of the first device includes a first maximum bit rate of the first device, and the method further includes: The session management function network element sends subscription data of the second device to the policy control function network element, where the subscription data of the second device includes a second maximum bit rate of the second device. That the policy control function network element determines the target maximum bit rate of the second device based on the subscription data of the first device includes: The policy control function network element determines a smaller value between the second maximum bit rate of the second device and the first maximum bit rate of the first device as the target maximum bit rate of the second device.

In a possible implementation, the method further includes: The access and mobility management function network element sends a SUPI of the first device to the session management function network element; and the session management function network element obtains the subscription data of the first device from a data storage network element based on the SUPI of the first device.

In a possible implementation, the method further includes: The access and mobility management function network element sends a SUPI of the second device to the session management function network element; and the session management function network element obtains the subscription data of the second device from the data storage network element based on the SUPI of the second device.

In a possible implementation, the method further includes: The first device sends the SUPI of the second device to the access and mobility management function network element; and the access and mobility management function network element determines the SUPI of the first device based on a correspondence between the second device and the first device.

In a possible implementation, the method further includes: The policy control function network element sends the target maximum bit rate of the second device to the session management function network element.

According to a fourth aspect, this application provides a communication method. The method may be applied to a session management function network element, or may be applied to an apparatus (for example, a chip, a chip system, or a circuit) in the session management function network element or an apparatus that can be used together with the session management function network element. The following uses an example in which the method is applied to the session management function network element for description. The method may include: receiving a second session establishment request, where the second session establishment request includes a SUPI of a first device and a SUPI of a second device; and sending a first request, where the first request includes the SUPI of the first device.

In the solution provided in this application, the session management function network element may send the SUPI of the first device to the policy control function network element by using the first request, so that the policy control function network element can obtain subscription data of the first device based on the SUPI of the first device, and determine a target maximum bit rate of the second device based on the subscription data of the first device. Because the second device accesses a core network via the first device, the target maximum bit rate of the second device is related to the subscription data of the first device. Therefore, a proper first maximum bit rate may be determined for the second device based on the subscription data of the first device, so that the target maximum bit rate of the second device does not exceed a first maximum bit rate of the first device, thereby standardizing session establishment. This can avoid a problem that data cannot be transmitted after a session is established for the second device, thereby improving session establishment accuracy.

It should be understood that, the communication method according to the fourth aspect corresponds to the communication methods according to the first aspect and the second aspect, and specific content corresponds to content in the first aspect and the second aspect. For corresponding features of the fourth aspect and beneficial effects achieved, refer to descriptions of the first aspect and the second aspect. To avoid repetition, detailed descriptions are appropriately omitted herein.

In a possible implementation, the method further includes: obtaining the subscription data of the first device from a data storage network element based on the SUPI of the first device, where the subscription data of the first device includes a default second maximum bit rate of the second device.

In a possible implementation, the method further includes: obtaining the subscription data of the first device and subscription data of the second device from the data storage network element based on the SUPI of the first device and the SUPI of the second device, where the subscription data of the first device includes the first maximum bit rate of the first device, and the subscription data of the second device includes the second maximum bit rate of the second device.

In a possible implementation, the method further includes: sending the subscription data of the first device.

In a possible implementation, the method further includes: sending the subscription data of the second device.

In a possible implementation, the first request further includes a SUPI of the second device.

In a possible implementation, the first request further includes indication information, and the indication information indicates a third core network element to determine the second maximum bit rate of the second device.

In a possible implementation, the second session establishment request further includes indication information, and the indication information indicates a fourth core network element to determine the target maximum bit rate of the second device.

In a possible implementation, the fourth core network element is a policy control function network element.

In a possible implementation, the method further includes: receiving the target maximum bit rate of the second device; and sending the target maximum bit rate of the second device.

According to a fifth aspect, an embodiment of this application provides a communication apparatus. The communication apparatus may be used in a policy control function network element, may be used in an apparatus (for example, a chip, a chip system, or a circuit) in the policy control function network element, or may be used in a logical module or software that can implement all or a part of the policy control function network element. The communication apparatus has a function of implementing behavior in the method instance according to the first aspect. The function may be implemented by hardware, or may be implemented by hardware executing corresponding software. The hardware or the software includes one or more modules corresponding to the foregoing function. For beneficial effects, refer to descriptions of the first aspect. Details are not described herein again.

According to a sixth aspect, an embodiment of this application provides a communication apparatus. The communication apparatus may be used in an access and mobility management function network element, may be used in an apparatus (for example, a chip, a chip system, or a circuit) in the access and mobility management function network element, or may be used in a logical module or software that can implement all or a part of the access and mobility management function network element. The communication apparatus has a function of implementing behavior in the method instance according to the first aspect or the second aspect. The function may be implemented by hardware, or may be implemented by hardware executing corresponding software. The hardware or the software includes one or more modules corresponding to the foregoing function. For beneficial effects, refer to descriptions of the first aspect or the second aspect. Details are not described herein again.

According to a seventh aspect, an embodiment of this application provides a communication apparatus. The communication apparatus may be used in a core network element, may be used in an apparatus (for example, a chip, a chip system, or a circuit) in the core network element, or may be used in a logical module or software that can implement all or a part of the core network element. The core network element may include a session management function network element, a policy control function network element, an access and mobility management function network element, a data storage network element, and the like. The communication apparatus has a function of implementing behavior in the method instance according to the third aspect. The function may be implemented by hardware, or may be implemented by hardware executing corresponding software. The hardware or the software includes one or more modules corresponding to the foregoing function. For beneficial effects, refer to descriptions of the third aspect. Details are not described herein again.

According to an eighth aspect, an embodiment of this application provides a communication apparatus. The communication apparatus may be used in a session management function network element, may be used in an apparatus (for example, a chip, a chip system, or a circuit) in the session management function network element, or may be used in a logical module or software that can implement all or a part of the session management function network element. The communication apparatus has a function of implementing behavior in the method instance according to the first aspect or the fourth aspect. The function may be implemented by hardware, or may be implemented by hardware executing corresponding software. The hardware or the software includes one or more modules corresponding to the foregoing function. For beneficial effects, refer to descriptions of the first aspect or the fourth aspect. Details are not described herein again.

According to a ninth aspect, a communication apparatus is provided. The communication apparatus may be the policy control function network element in the foregoing method embodiments, or may be an apparatus (for example, a chip, a chip system, or a circuit) disposed in the policy control function network element. The apparatus may include a processor, a memory, an input interface, and an output interface. The input interface is configured to receive information from a communication apparatus other than the communication apparatus. The output interface is configured to output information to a communication apparatus other than the communication apparatus. The processor is coupled to the memory. The memory is configured to store a program or instructions. When the program or the instructions are executed by the processor, the communication apparatus is enabled to perform the communication method that is provided in the first aspect or any one of the implementations of the first aspect and that is performed by the terminal device or the apparatus in the terminal device in the foregoing method embodiments.

According to a tenth aspect, a communication apparatus is provided. The communication apparatus may be the access and mobility management function network element in the foregoing method embodiments, or may be an apparatus (for example, a chip, a chip system, or a circuit) disposed in the access and mobility management function network element. The apparatus may include a processor, a memory, an input interface, and an output interface. The input interface is configured to receive information from a communication apparatus other than the communication apparatus. The output interface is configured to output information to a communication apparatus other than the communication apparatus. The processor is coupled to the memory. The memory is configured to store a program or instructions. When the program or the instructions are executed by the processor, the communication apparatus is enabled to perform the communication method that is provided in the first aspect or any one of the implementations of the first aspect or the second aspect or any one of the implementations of the second aspect and that is performed by the terminal device or the apparatus in the terminal device in the foregoing method embodiments.

According to an eleventh aspect, a communication apparatus is provided. The communication apparatus may be the core network element in the foregoing method embodiments, or may be an apparatus (for example, a chip, a chip system, or a circuit) disposed in the core network element. The core network element may include a session management function network element, a policy control function network element, an access and mobility management function network element, a data storage network element, and the like. The apparatus may include a processor, a memory, an input interface, and an output interface. The input interface is configured to receive information from a communication apparatus other than the communication apparatus. The output interface is configured to output information to a communication apparatus other than the communication apparatus. The processor is coupled to the memory. The memory is configured to store a program or instructions. When the program or the instructions are executed by the processor, the communication apparatus is enabled to perform the communication method that is provided in the third aspect or any one of the implementations of the third aspect and that is performed by the terminal device or the apparatus in the terminal device in the foregoing method embodiments.

According to a twelfth aspect, a communication apparatus is provided. The communication apparatus may be the session management function network element in the foregoing method embodiments, or may be an apparatus (for example, a chip, a chip system, or a circuit) disposed in the session management function network element. The apparatus may include a processor, a memory, an input interface, and an output interface. The input interface is configured to receive information from a communication apparatus other than the communication apparatus. The output interface is configured to output information to a communication apparatus other than the communication apparatus. The processor is coupled to the memory. The memory is configured to store a program or instructions. When the program or the instructions are executed by the processor, the communication apparatus is enabled to perform the communication method that is provided in the first aspect or any one of the implementations of the first aspect or the fourth aspect or any one of the implementations of the fourth aspect and that is performed by the terminal device or the apparatus in the terminal device in the foregoing method embodiments.

According to a thirteenth aspect, this application provides a computer-readable storage medium. The computer-readable storage medium stores computer instructions. When a computer program or the computer instructions are run, a computer is enabled to perform the method according to any one of the first aspect or the possible implementations thereof, the second aspect or the possible implementations thereof, the third aspect or the possible implementations thereof, or the fourth aspect or the possible implementations thereof.

According to a fourteenth aspect, this application provides a computer program product including executable instructions. When the computer program product runs on a computer, the computer is enabled to perform the method according to any one of the first aspect or the possible implementations thereof, the second aspect or the possible implementations thereof, the third aspect or the possible implementations thereof, or the fourth aspect or the possible implementations thereof.

According to a fifteenth aspect, this application provides a communication apparatus. The communication apparatus includes a processor, and is configured to implement the method according to any one of the first aspect or the possible implementations thereof, the second aspect or the possible implementations thereof, the third aspect or the possible implementations thereof, or the fourth aspect or the possible implementations thereof. In a possible implementation, the communication apparatus may further include a memory, configured to store program instructions and/or data. The communication apparatus may be a chip system. The chip system may include a chip, or may include a chip and another discrete component.

According to a sixteenth aspect, this application provides a communication apparatus. The communication apparatus is any core network element according to any one of the foregoing implementations, and is configured to implement a function or an execution method of the core network element.

According to a seventeenth aspect, this application provides a communication system, including the first device, the second device, the policy control function network element, the session management function network element, the access and mobility management function network element, and the data storage network element in any one of the foregoing implementations.

### BRIEF DESCRIPTION OF DRAWINGS

To describe embodiments of this application more clearly, the following briefly describes accompanying drawings used in the embodiments. It is clear that persons of ordinary skill in the art can further obtain other drawings based on these accompanying drawings without creative efforts.
FIG. 1 is a diagram of a network architecture of a communication system according to an embodiment of this application;
FIG. 2 is a diagram of a network architecture of another communication system according to an embodiment of this application;
FIG. 3 is a schematic flowchart of a communication method according to an embodiment of this application;
FIG. 4 is an interaction diagram of a communication method according to an embodiment of this application;
FIG. 5 is an interaction diagram of another communication method according to an embodiment of this application;
FIG. 6 is an interaction diagram of still another communication method according to an embodiment of this application;
FIG. 7 is an interaction diagram of still another communication method according to an embodiment of this application;
FIG. 8 is an interaction diagram of still another communication method according to an embodiment of this application;
FIG. 9 is an interaction diagram of still another communication method according to an embodiment of this application;
FIG. 10 is an interaction diagram of still another communication method according to an embodiment of this application;
FIG. 11 is an interaction diagram of still another communication method according to an embodiment of this application;
FIG. 12 is a diagram of a structure of a communication apparatus according to an embodiment of this application;
FIG. 13 is a diagram of a structure of another communication apparatus according to an embodiment of this application;
FIG. 14 is a diagram of a structure of still another communication apparatus according to an embodiment of this application;
FIG. 15 is a diagram of a structure of still another communication apparatus according to an embodiment of this application; and
FIG. 16 is an interaction diagram of a communication method according to an embodiment of this application.

### DESCRIPTION OF EMBODIMENTS

The following describes the technical solutions in embodiments of this application with reference to the accompanying drawings in embodiments of this application. The terms "system" and "network" may be used interchangeably in embodiments of this application. Unless otherwise specified, "/" represents an "or" relationship between associated objects. For example, A/B may represent A or B. "And/or" in this application describes only an association relationship of associated objects and represents that three relationships may exist. For example, A and/or B may represent the following three cases: Only A exists, both A and B exist, and only B exists, where A and B may be singular or plural. In addition, in the descriptions of this application, "a plurality of" means two or more unless otherwise specified. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same network elements or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

The objectives, technical solutions, and beneficial effect of this application are further described in detail in the following specific implementations. It should be understood that, the following descriptions are merely specific implementations of this application, but are not intended to limit the protection scope of this application. Any modification, equivalent replacement, or improvement made based on the technical solutions of this application shall fall within the protection scope of this application.

It should be understood that, the technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, and a worldwide interoperability for microwave access (worldwide interoperability for microwave access, WiMAX) system. The technical solutions in embodiments of this application may be further applied to another communication system, for example, a public land mobile network (public land mobile network, PLMN) system, a long term evolution advanced (LTE advanced, LTE-A) system, a 5th generation mobile communication (the 5th generation, 5G) system, an NR system, a machine to machine (machine to machine, M2M) system, or another future evolved communication system. This is not limited in embodiments of this application.

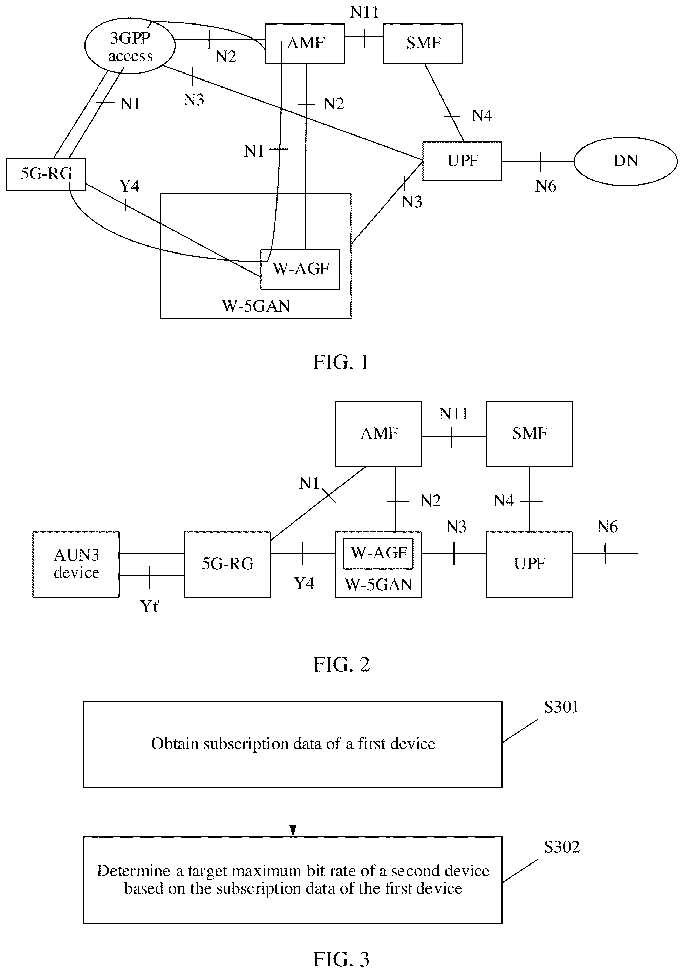

Refer to FIG. 1. FIG. 1 is a diagram of a network architecture of a communication system according to an embodiment of this application. The network architecture may be understood as a 5G core network non-roaming architecture of a 5G-RG. As shown in FIG. 1, the architecture may include the 5G-RG, a wireline access gateway function (wireline access gateway function, W-AGF), a wireline 5G access network (wireline 5G access network, W-5GAN), a 3GPP access device, an access and mobility management function (access and mobility management function, AMF) network element, a session management function (session management function, SMF) network element, a user plane function (user plane function, UPF) network element, and a data network (data network, DN).

In a non-roaming scenario, the 5G-RG may access a core network in a 3GPP manner, for example, may be connected to a 3GPP access (3GPP access) device through an N1 interface, or may be connected to a wireline access gateway function through a Y4 interface, and access the core network via a non-3GPP access device. The non-3GPP device may be classified into an AUN3 (a non-3GPP device that can be authenticated) and a non-authenticable non-3GPP (non-authenticable non-3GPP, NAUN3) (a non-3GPP device that cannot be authenticated). It may be understood that, user equipment (user equipment, UE) or a non-3GPP device may access the core network via the gateway, namely, the 5G-RG. When UE is connected to the 5G-RG, the 5G-RG may be a non-3GPP interworking function (non-3GPP interworking function, N3IWF)/trusted non-3GPP access point (trusted non-3GPP access point, TNAP). However, if a non-3GPP device, for example, an AUN3, is connected to the 5G-RG, data needs to be routed to the core network via the 5G-RG and the W-AGF. If the non-3GPP device is a NAUN3, the device is invisible to a 5GC.

Further, refer to FIG. 2. FIG. 2 is a diagram of a network architecture of another communication system according to an embodiment of this application. The network architecture may be understood as a diagram of an AUN3 architecture after a 5G-RG. As shown in FIG. 2, based on FIG. 1, the architecture may further include an AUN3 device. In the architecture, an authenticable non-3GPP device (AUN3) establishes a connection to a 5G residential gateway (5G-RG) in a non-3GPP (for example, wireless fidelity (wireless fidelity, Wi-Fi)) wireless connection manner, and accesses a core network via the 5G-RG. The core network has a context of an AUN3, and the context may exist independently of the 5G-RG. The AUN3 may transmit data by using a packet data unit (packet data unit, PDU) session established by the 5G-RG for the AUN3. The 5G-RG establishes only one session for each AUN3.

When the 5G-RG establishes a session for the AUN3 device, the 5G-RG sends a session establishment request to an AMF network element through an N2 interface and a non-access stratum (non-access stratum, NAS) of the AUN3 that is established when the AUN3 performs registration. In this case, the AMF network element obtains a SUPI of the AUN3 by using the NAS, and sends the SUPI (as the SUPI of session) of the AUN3 and a SUPI of the 5G-RG to an SMF, to request the SMF to establish a session for the AUN3. The SMF sends the SUPI of the AUN3 and the SUPI of the 5G-RG to a PCF network element in an SMpolicy create command, to request the PCF network element to provide a session-related policy.

The following describes devices, network elements, and networks included in the network architecture.
1. A terminal device may be UE, a handheld terminal, a notebook computer, a subscriber unit (subscriber unit), a cellular phone (cellular phone), a smart phone (smart phone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, or another device that can access a network. The terminal device and an access network device communicate with each other by using an air interface technology.
2. Untrusted non-3GPP access network device: The network element allows a terminal device to interconnect and interwork with a 3GPP core network by using a non-3GPP technology, where the non-3GPP technology is, for example, Wi-Fi, worldwide interoperability for microwave access (Worldwide Interoperability for Microwave Access, WiMAX), or a code division multiple access (Code Division Multiple Access, CDMA) network, may directly access the 3GPP core network compared with a trusted non-3GPP access network device. The network element needs to interconnect and interwork with the 3GPP core network by using a security tunnel established by a security gateway, where the security gateway is, for example, an evolved packet data gateway (Evolved Packet Data Gateway, ePDG) or an N3IWF network element.
3. An access and mobility management function network element (AMF network element) belongs to a core network element, and is mainly responsible for a signaling processing part, for example, functions such as access control, mobility management, attachment and detachment, and gateway selection. When serving a session in a terminal device, the AMF network element may provide a control-plane storage resource for the session, and store a session identifier, an SMF network element identifier associated with the session identifier, and the like.
4. A session management function network element (SMF network element) is responsible for user plane network element selection, user plane network element redirection, internet protocol (internet protocol, IP) address assignment, bearer establishment, modification, and release, and QoS control.
5. A user plane function network element (UPF network element) is responsible for forwarding and receiving user data in a terminal device. The user plane function network element may receive user data from a data network, and transmit the user data to the terminal device via an access network device. The UPF network element may alternatively receive user data from the terminal device via the access network device, and forward the user data to the data network. Resource transmission and scheduling functions that are used by the UPF network element to provide services for the terminal device are managed and controlled by the SMF network element.
6. A policy control function network element (PCF network element) mainly supports a unified policy framework to govern network behavior and provides policy rules to control layer network functions, and is responsible for obtaining policy-related user subscription information.
7. A data storage network element may be a unified data repository (unified data repository, UDR network element) network element or a unified data management (unified data management, UDM) network element. The UDR network element may be mainly responsible for storing structured data, and stored content includes subscription data, policy data, externally exposed structured data, and application-related data. The UDM network element may be mainly responsible for functions such as subscription data management and user access authorization.

It may be understood that, names of the foregoing network elements are described by using names in a 5G communication system as an example. For example, in the 5G communication system, the session management network element may be an SMF network element. It should be understood that, names of all network elements in this application are merely used as examples. In future communication, for example, 6G, the session management network element may still be an SMF network element, or may be referred to as another name. Alternatively, in future communication, for example, 6G, the network elements in this application may be replaced with other entities, devices, or the like that have same functions. This is not limited in this application. Uniform descriptions are provided herein, and details are not described below again. Each of the foregoing network elements in the core network may also be referred to as a functional entity, and may be a network element implemented on dedicated hardware, or may be a software instance running on dedicated hardware, or an instance of a virtualization function on a proper platform. For example, the virtualization platform may be a cloud platform.

It should be noted that, the network architectures shown in FIG. 1 and FIG. 2 do not constitute a limitation on a 5G network, are not limited to including only the network elements shown in the figures, and may further include other devices that are not represented in the figures. Details are not listed herein in this application. A distribution form of the network elements in the core network is not limited in embodiments of this application. The distribution forms shown in FIG. 1 and FIG. 2 are merely examples, and are not limited in this application.

Optionally, various network elements in embodiments of this application may be communication devices, or may be chips, chip systems, or the like that may be used in the communication devices. The foregoing network elements may be different communication devices, or may be different communication apparatuses, modules, or subsystems in a same communication device. This is not limited in embodiments of this application.

In embodiments of this application, the terminal device or the access network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by the terminal device, the access network device, or a functional module that can invoke and execute the program and that is in the terminal device or the access network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD) or a digital versatile disc (digital versatile disc, DVD)), and a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

For ease of understanding of embodiments of this application, the following first describes current implementation of establishing a session by a 5G-RG device for an AUN3 device. The following provides an example for description.

That the 5G-RG device establishes the session for the AUN3 device may be understood as that the 5G-RG device establishes a PDU session for the AUN3 device. A procedure may include the following steps.
1. The 5G-RG device sends a PDU session establishment request message (PDU session establishment request message) to an AMF network element. The message may be sent to a W-AGF by using wireline control user plane (wireline control plane, W-CP) signaling. The W-AGF transparently transmits the message to the AMF network element by using an N2 uplink NAS transport message (N2 uplink NAS transport message).
2. The AMF network element initiates a session establishment request to an SMF network element, where the request carries an identifier of the W-AGF, so that the SMF network element selects a UPF network element.
3. The W-AGF determines a user plane resource of the PDU session based on a policy and a quality of service (quality of service, QoS) parameter (parameter).
4. The W-AGF sets up the user plane resource.
5. The W-AGF sends a PDU session establishment accept message to the 5G-RG device by using W-CP signaling.
6. The W-AGF sends an N2 PDU session resource setup response (N2 PDU session resource setup response) to the AMF network element, where the response includes a PDU session identifier (PDU session ID), tunnel information (AN tunnel Info), accepted/rejected QoS flow identifiers (list of accepted/rejected QFI(s)), and a user plane security enforcement policy notification (user plane security enforcement policy notification).
7. Complete session establishment.

Subscription data of the 5G-RG device is independent of that of the AUN3 device. One 5G-RG device may be connected to a plurality of AUN3 devices, and the AUN3 devices are not bound to the 5G-RG device. Therefore, a case in which a session-AMBR in AUN3 subscription is greater than a session establishment capability of the 5G-RG device may occur. Consequently, the AUN3 device cannot transmit data after session establishment.

In view of a problem that session establishment accuracy by the 5G-RG device for the AUN3 device is low, embodiments of this application provide a communication method, to improve session establishment accuracy. Specifically, subscription data of a first device (for example, the 5G-RG device) may be obtained, and a target maximum bit rate (for example, a session-AMBR) of a second device (for example, the AUN3 device) may be determined based on the subscription data of the first device. Because the second device accesses a core network via the first device, the target maximum bit rate of the second device is related to the subscription data of the first device. Therefore, a proper first maximum bit rate may be determined for the second device based on the subscription data of the first device, so that the target maximum bit rate of the second device does not exceed a first maximum bit rate of the first device, thereby standardizing session establishment. This can avoid a problem that data cannot be transmitted after a session is established for the second device, thereby improving session establishment accuracy.

This application provides a communication method. The following separately describes the communication method by using the following embodiments. In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In an embodiment (for example, the following embodiment corresponding to FIG. 3) of this application, the method may be described by using a policy control function network element (for example, a PCF network element), an access and mobility management function network element (for example, an AMF network element), or an access and mobility management function network element (for example, an AMF network element) as an execution body. The following uses the PCF network element, the SMF network element, the AMF network element, and the like as examples for description, and names of these network elements are not limited substantially. In addition, an execution body of the interaction example is not limited in this application. For example, a core network element may be a chip, a chip system, or a processor that supports the network element in implementing the method, or may be a logical module or software that can implement all or some functions of the network element. In embodiments of this application, uniform descriptions are provided herein, and details are not described below again.

The following describes a communication method provided in an embodiment of this application. Refer to FIG. 3. FIG. 3 is a schematic flowchart of a communication method according to an embodiment of this application. As shown in FIG. 3, the communication method may include at least the following steps.

S301: Obtain subscription data of a first device.

The first device may be a device that can be connected to a 5G network and a conventional (for example, wired or wireless) network, for example, may be the 5G-RG device shown in FIG. 1 and FIG. 2. In other words, a user may access the 5G network via the first device. It may be understood that, the 5G network is merely an example for description. In a future communication scenario, the first device may alternatively be a device that can be connected to a 6G network or another network and a conventional network. In the following descriptions, an example in which the first device is a 5G-RG device is used for description. Uniform descriptions are provided herein, and details are not described below again.

The subscription data of the first device may include information such as identification information of the first device, a session maximum bit rate, and a user equipment maximum bit rate.

The subscription data of the first device may be obtained in any one of the following manners:
In a first possible implementation, an execution body may be a PCF network element, and the PCF network element may obtain the subscription data of the first device from a first core network element. For example, the first core network element may be an SMF network element.

In a second possible implementation, an execution body may be a PCF network element, an SMF network element, or an AMF network element. The PCF network element, the SMF network element, or the AMF network element may first obtain a SUPI of the first device, and then obtain the subscription data of the first device from a second core network element based on the SUPI of the first device. For example, the second core network element may be a data storage network element.

In a third possible implementation, an execution body may be an SMF network element. The SMF network element may first obtain a user location identifier (user location information, ULI) of the first device, and then obtain the subscription data of the first device from a second core network element based on the ULI of the first device. Because a ULI of a second device is the same as the ULI of the first device, herein, it may also be understood as that the SMF network element obtains the ULI of the second device, and obtains the subscription data of the first device from the second core network element based on the ULI of the second device.

S302: Determine a target maximum bit rate of the second device based on the subscription data of the first device.

After the subscription data of the first device is obtained, the target (target/proper) first maximum bit rate of the second device may be determined based on the subscription data of the first device.

The first maximum bit rate in this embodiment of this application may also be a first aggregate maximum bit rate (aggregate maximum bite rate, AMBR). This is not limited herein. The first maximum bit rate may be a session aggregate maximum bit rate (session-AMBR), may be a user equipment aggregate maximum bit rate (UE-AMBR), or may be a user equipment slice maximum bit rate (UE-Slice-MBR). The session-AMBR may be understood as an AMBR at a granularity of a session, that is, an AMBR used by the second device to transmit data by using a specific session. The UE-AMBR may be understood as an AMBR at a granularity of user equipment. In other words, the UE-AMBR is a maximum bit rate that can be used for all sessions of the user equipment. The UE-slice-MBR may be understood as an MBR at a granularity of a slice, that is, a maximum bit rate that can be used for all sessions of the second device on a slice.

The second device may be understood as an authenticable non-3GPP device. For example, the second device is an AUN3 device.

In this application, the second device may access a core network via the first device. For example, if the first device is a 5G-RG, and the second device is an AUN3 device, the AUN3 device may access the core network via the 5G-RG (AUN3 served by a 5G-RG). The first device may correspond to at least one second device. In other words, a part or all of the at least one second device may be dynamically connected to the first device, or none of the at least one second device may be dynamically connected to the first device.

In this embodiment, the subscription data of the first device may be obtained, and the target maximum bit rate of the second device may be determined based on the subscription data of the first device. Because the second device accesses the core network via the first device, the target maximum bit rate of the second device is related to the subscription data of the first device. Therefore, a proper first maximum bit rate may be determined for the second device based on the subscription data of the first device, so that the target maximum bit rate of the second device does not exceed a first maximum bit rate of the first device, thereby standardizing session establishment. This can avoid a problem that data cannot be transmitted after a session is established for the second device, thereby improving session establishment accuracy.

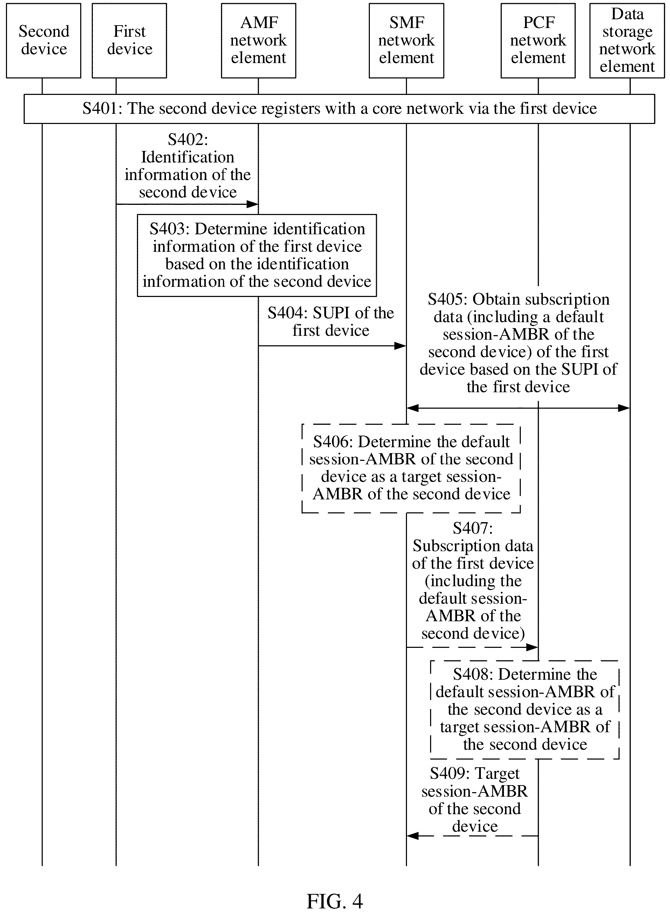

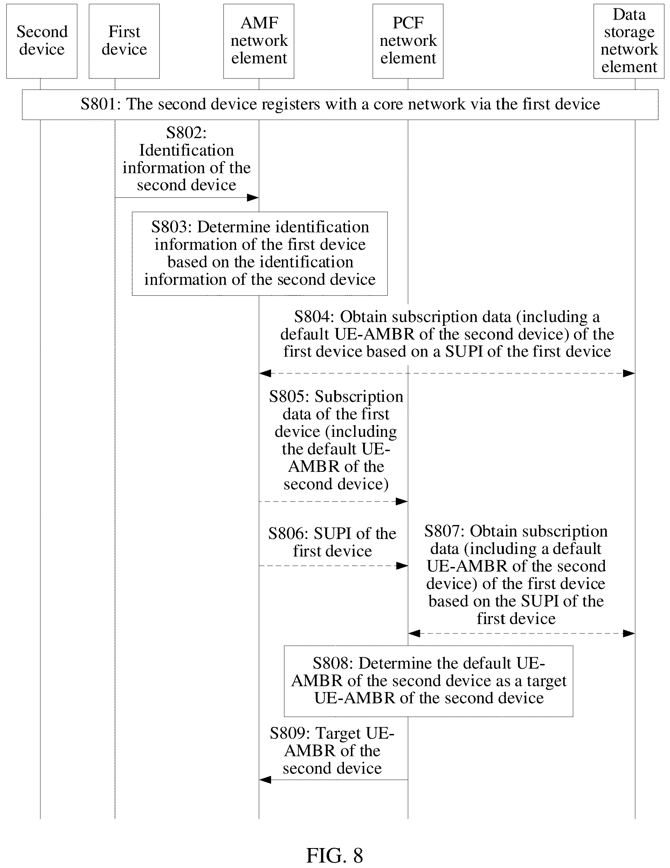

For some specific implementations and beneficial effects of the method embodiment shown in FIG. 3, refer to the following descriptions of FIG. 4 to FIG. 11. In other words, the embodiments shown in FIG. 4 to FIG. 11 are specific implementations of the embodiment shown in FIG. 3. To avoid redundancy, details are not described in the embodiment in FIG. 3. The embodiments shown in FIG. 4 to FIG. 7 may be understood as being at a session granularity, and may be applied to a session establishment scenario. The embodiments shown in FIG. 8 to FIG. 11 may be understood as being at a device granularity, and may be applied to a registration or service request (service request) scenario.

The following describes the communication method provided in embodiments of this application. Refer to FIG. 4. FIG. 4 is an interaction diagram of a communication method according to an embodiment of this application. In the method embodiment in FIG. 4, steps S401 to S406 may correspond to the second possible implementation (executed by the SMF network element) of obtaining the subscription data of the first device in step S301, and steps S401 to S405 and S407 to S409 may correspond to the first possible implementation of obtaining the subscription data of the first device in step S301. In this embodiment of this application, a first device, a second device, a first core network element, a second core network element, a third core network element, and a fourth core network element may be used as execution bodies of the interaction example to describe the method. In this embodiment, an example in which the first core network element is an SMF network element, the second core network element is a data storage network element, the third core network element is an AMF network element, the fourth core network element is a PCF network element, and a maximum bit rate is a session-AMBR/UE-slice-MBR (the session-AMBR is used as an example below) is used for description. As shown in FIG. 4, the communication method may include at least the following steps. Steps S406 to S409 are optional steps.

S401: The second device registers with a core network via the first device.

The second device may register with the core network via the first device. The core network may include the AMF network element, the SMF network element, the PCF network element, the data storage network element, and the like. For example, the first device may be a 5G-RG device, and the second device may be an AUN3 device.

It should be noted that, for specific descriptions of the first device and the second device, refer to the foregoing embodiment. Details are not described herein again.

The data storage network element in this embodiment of this application may be a UDM network element or a UDR network element.

S402: The first device sends identification information of the second device to the AMF network element. Correspondingly, the AMF network element receives the identification information of the second device from the first device.

After the second device registers with the core network via the first device, the first device may send the identification information of the second device to the AMF network element, for example, a SUPI or a 5^{th} generation globally unique temporary UE identity (5th generation globally unique temporary UE identity, 5G-GUTI). In a possible implementation, the first device may send a first session establishment request to the AMF network element, where the first session establishment request is for requesting the SMF network element to establish a session for the second device. For example, the session may be a PDU session. The first session establishment request may include the identification information of the second device.

S403: The AMF network element determines identification information of the first device based on the identification information of the second device.

After receiving the identification information, for example, the SUPI, of the second device from the first device, the AMF network element may determine the identification information, for example, a SUPI or a 5G-GUTI, of the first device based on the identification information of the second device. Specifically, the AMF network element may obtain a correspondence between the second device and the first device, and determine the identification information of the first device based on the correspondence and the identification information of the second device. The correspondence between the second device and the first device may be locally maintained by the AMF network element, or may be obtained by the AMF network element from the data storage network element.

S404: The AMF network element sends the SUPI of the first device to the SMF network element. Correspondingly, the SMF network element receives the SUPI of the first device from the AMF network element.

After determining the identification information of the first device, the AMF network element may send the SUPI in the identification information of the first device to the SMF network element. In a possible implementation, the AMF network element sends a second session establishment request to the SMF network element, to request the SMF network element to establish a session for the second device. The second session establishment request includes the SUPI of the first device and the SUPI of the second device.

Further, optionally, the second session establishment request may further include indication information, and the indication information indicates the PCF network element to determine a target session-AMBR of the second device.

S405: The SMF network element obtains subscription data of the first device from the data storage network element based on the SUPI of the first device, where the subscription data of the first device includes a default session-AMBR of the second device.

After receiving the SUPI of the first device from the AMF network element, the SMF network element may obtain the subscription data of the first device from the data storage network element based on the SUPI of the first device. The subscription data of the first device may include the default (default) session-AMBR of the second device. The default session-AMBR of the second device may be understood as a session-AMBR that can be used by the second device corresponding to the first device. In other words, session-AMBRs used by all second devices corresponding to the first device are the same. It should be noted that, if the subscription data of the first device includes the default session-AMBR of the second device, subscription data of the second device may not include the session-AMBR.

For example, the subscription data of the first device may be listed in the following table:

| Subscription data type | Field | Description |
|---|---|---|
| Session management subscription data | Subscribed session-AMBR (subscribed_session-AMBR) | Maximum uplink and downlink AMBRs shared among all non-guaranteed bit rate (guaranteed bit rate, GBR) QoS flows in each PDU session, and established for a data network name (data network name, DNN) and single network slice selection assistance information (single network slice selection assistance information, S-NSSAI) |
| | Default session-AMBR of the second device | Session-AMBR that can be used by the second device connected to the first device |

It should be noted that, after obtaining the subscription data of the first device, the SMF network element may perform step S406 or steps S407 to S409. Steps S407 to S409 are parallel optional steps of step S406.

S406: The SMF network element determines the default session-AMBR of the second device as the target session-AMBR of the second device.

After obtaining the subscription data of the first device, the SMF network element may determine the default session-AMBR of the second device in the subscription data of the first device as the target session-AMBR of the second device. Further, optionally, after receiving the target session-AMBR of the second device from the PCF network element, the SMF network element may send the target session-AMBR of the second device to a W-AGF and a UPF network element, to control a data rate of a session.

S407: The SMF network element sends the subscription data of the first device to the PCF network element, where the subscription data of the first device includes the default session-AMBR of the second device. Correspondingly, the PCF network element receives the subscription data of the first device from the SMF network element.

After obtaining the subscription data of the first device, the SMF network element may send the subscription data of the first device to the PCF network element. In a possible implementation, the SMF network element may send a first request to the PCF network element. The first request is for requesting a session-related policy of the second device from the PCF network element. For example, the first request may be a policy establishment request. The first request includes the subscription data of the first device, and the subscription data may include the default session-AMBR of the second device.

Further, optionally, the first request may further include indication information, and the indication information indicates the PCF network element to determine the target session-AMBR of the second device. When the second session establishment request includes the indication information, the indication information may be an independent message, or may be a container (the container includes the indication information). The SMF network element may directly forward the indication information in the second session establishment request to the PCF network element. In other words, the indication information may be ciphertext for the SMF network element, and the SMF network element does not read content actually included in the indication information.

S408: The PCF network element determines the default session-AMBR of the second device as the target session-AMBR of the second device.

After receiving the subscription data of the first device from the SMF network element, the PCF network element may determine the default session-AMBR of the second device in the subscription data of the first device as the target session-AMBR of the second device.

S409: The PCF network element sends the target session-AMBR of the second device to the SMF network element.

After determining the target session-AMBR of the second device, the PCF network element may send the target session-AMBR of the second device to the SMF network element. In a possible implementation, the PCF network element sends a first response to the SMF network element, where the first response is for responding to the first request, and the first response includes the target session-AMBR of the second device.

Further, optionally, after receiving the target session-AMBR of the second device from the PCF network element, the SMF network element may send the target session-AMBR of the second device to a W-AGF and a UPF network element, to control a data rate of a session.

In this embodiment, the subscription data of the first device includes the default session-AMBR of the second device. The default session-AMBR of the second device is determined as the target session-AMBR of the second device, so that the target session-AMBR of the second device can be determined based on the subscription data of the first device. A proper first maximum bit rate may be determined for the second device based on the subscription data of the first device, so that a target maximum bit rate of the second device does not exceed a first maximum bit rate of the first device, thereby standardizing session establishment. This can avoid a problem that data cannot be transmitted after a session is established for the second device, thereby improving session establishment accuracy.

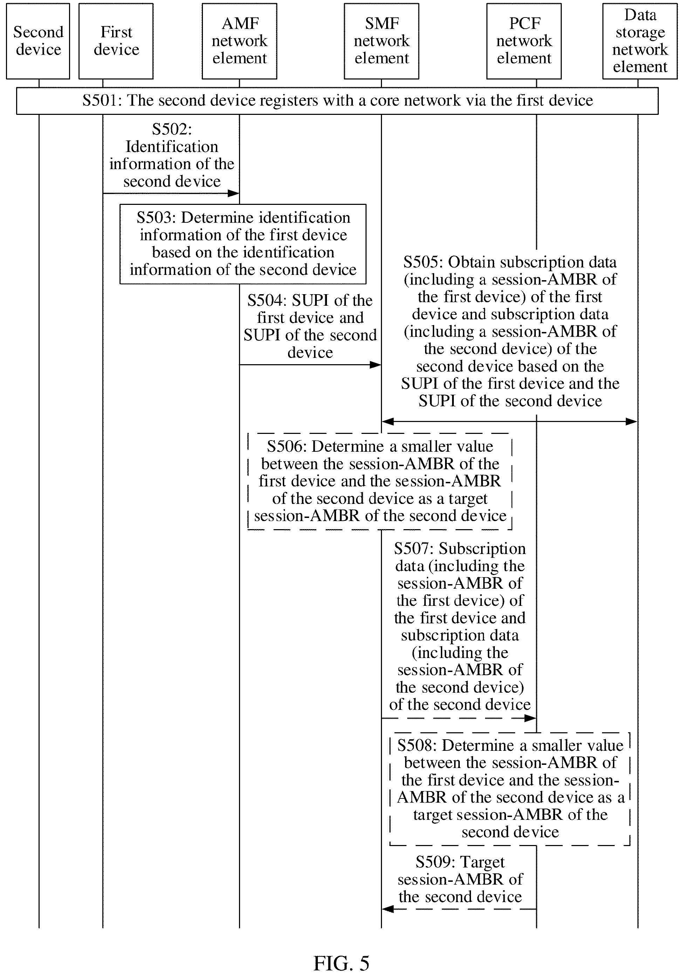

The following describes another communication method provided in an embodiment of this application. Refer to FIG. 5. FIG. 5 is an interaction diagram of another communication method according to an embodiment of this application. In the method embodiment in FIG. 5, steps S501 to S506 may correspond to the second possible implementation (executed by the SMF network element) of obtaining the subscription data of the first device in step S301, and steps S501 to S505 and S507 to S509 may correspond to the first possible implementation of obtaining the subscription data of the first device in step S301. In this embodiment of this application, a first device, a second device, a first core network element, a second core network element, a third core network element, and a fourth core network element may be used as execution bodies of the interaction example to describe the method. In this embodiment, an example in which the first core network element is an SMF network element, the second core network element is a data storage network element, the third core network element is an AMF network element, the fourth core network element is a PCF network element, and a maximum bit rate is a session-AMBR/UE-slice-MBR (the session-AMBR is used as an example below) is used for description. As shown in FIG. 5, the communication method may include at least the following steps. Steps S506 to S509 are optional steps.

Steps S501 to S503 correspond to steps S401 to S403. For related descriptions of S501 to S503, refer to the foregoing descriptions of S401 to S403. Details are not described herein again.

S504: The AMF network element sends the SUPI of the first device and the SUPI of the second device to the SMF network element. Correspondingly, the SMF network element receives the SUPI of the first device and the SUPI of the second device from the AMF network element.

After determining the identification information of the first device, the AMF network element may send the SUPI in the identification information of the first device and the SUPI in the identification information of the second device to the SMF network element. In a possible implementation, the AMF network element sends a second session establishment request to the SMF network element, to request the SMF network element to establish a session for the second device. The second session establishment request includes the SUPI of the first device and the SUPI of the second device.

Further, optionally, the second session establishment request may further include indication information, and the indication information indicates the PCF network element to determine a target session-AMBR of the second device.

S505: The SMF network element obtains the subscription data of the first device and subscription data of the second device from the data storage network element based on the SUPI of the first device and the SUPI of the second device, where the subscription data of the first device includes a session-AMBR of the first device, and the subscription data of the second device includes a session-AMBR of the second device.

After receiving the SUPI of the first device and the SUPI of the second device from the AMF network element, the SMF network element may obtain the subscription data of the first device and the subscription data of the second device respectively from the data storage network element based on the SUPI of the first device and the SUPI of the second device. The subscription data of the first device includes the session-AMBR of the first device, and the subscription data of the second device includes the session-AMBR of the second device.

For example, the subscription data of the first device may be listed in the following table:

| Subscription data type | Field | Description |
|---|---|---|
| Session management subscription data | Subscribed session-AMBR (subscribed session-AMBR) | Maximum uplink and downlink MBRs shared among all non-GBR QoS flows in each PDU session, and established for a DNN and S-NSSAI |

For example, the subscription data of the second device may be listed in the following table:

| Subscription data type | Field | Description |
|---|---|---|
| Session management subscription data | Subscribed session-AMBR (subscribed session-AMBR) | Maximum uplink and downlink MBRs shared among all non-GBR QoS flows in each PDU session, and established for a DNN and S-NSSAI |

It may be understood that, the subscribed session-AMBR in the foregoing table may correspond to the session-AMBR in the subscription data of the first device/the second device.

It should be noted that, after obtaining the subscription data of the first device, the SMF network element may perform step S506 or steps S507 to S509. Steps S507 to S509 are parallel optional steps of step S506.

S506: The SMF network element determines a smaller value between the session-AMBR of the first device and the session-AMBR of the second device as the target session-AMBR of the second device.

After obtaining the subscription data of the first device and the subscription data of the second device, the SMF network element may compare the session-AMBR of the first device in the subscription data of the first device with the session-AMBR of the second device in the subscription data of the second device, and use the smaller value as the target session-AMBR of the second device.

It should be noted that, if the SMF network element compares a UE-slice-MBR of the first device in the subscription data of the first device with a UE-slice-MBR of the second device in the subscription data of the second device, MBRs of a same slice are compared, and subsequent UE-slice-MBRs are similar. This is uniformly described herein, and details are not described again.

Further, optionally, after receiving the target session-AMBR of the second device from the PCF network element, the SMF network element may send the target session-AMBR of the second device to a W-AGF and a UPF network element, to control a data rate of a session.

S507: The SMF network element sends the subscription data of the first device and the subscription data of the second device to the PCF network element, where the subscription data of the first device includes the session-AMBR of the first device, and the subscription data of the second device includes the session-AMBR of the second device. Correspondingly, the PCF network element receives the subscription data of the first device and the subscription data of the second device from the SMF network element.

After obtaining the subscription data of the first device, the SMF network element may send the subscription data of the first device and the subscription data of the second device to the PCF network element. In a possible implementation, the SMF network element may send a first request to the PCF network element, where the first request includes the subscription data of the first device and the subscription data of the second device, the subscription data of the first device includes the session-AMBR of the first device, and the subscription data of the second device includes the session-AMBR of the second device.

Further, optionally, the first request may further include indication information, and the indication information indicates the PCF network element to determine the target session-AMBR of the second device.

S508: The PCF network element determines a smaller value between the session-AMBR of the first device and the session-AMBR of the second device as the target session-AMBR of the second device.

After receiving the subscription data of the first device and the subscription data of the second device from the SMF network element, the PCF network element may compare the session-AMBR of the first device in the subscription data of the first device with the session-AMBR of the second device in the subscription data of the second device, and use the smaller value as the target session-AMBR of the second device.

S509: The PCF network element sends the target session-AMBR of the second device to the SMF network element.

Step S509 corresponds to step S409. For related descriptions in S509, refer to the foregoing descriptions in S409. Details are not described herein again.

In this embodiment, the subscription data of the first device includes the session-AMBR of the first device, and the subscription data of the second device includes the session-AMBR of the second device. The session-AMBR of the first device is compared with the session-AMBR of the second device, and the smaller value is determined as the target session-AMBR of the second device. In this way, the target session-AMBR of the second device can be determined based on the subscription data of the first device. A proper first maximum bit rate may be determined for the second device based on the subscription data of the first device, so that a target maximum bit rate of the second device does not exceed a first maximum bit rate of the first device, thereby standardizing session establishment. This can avoid a problem that data cannot be transmitted after a session is established for the second device, thereby improving session establishment accuracy.

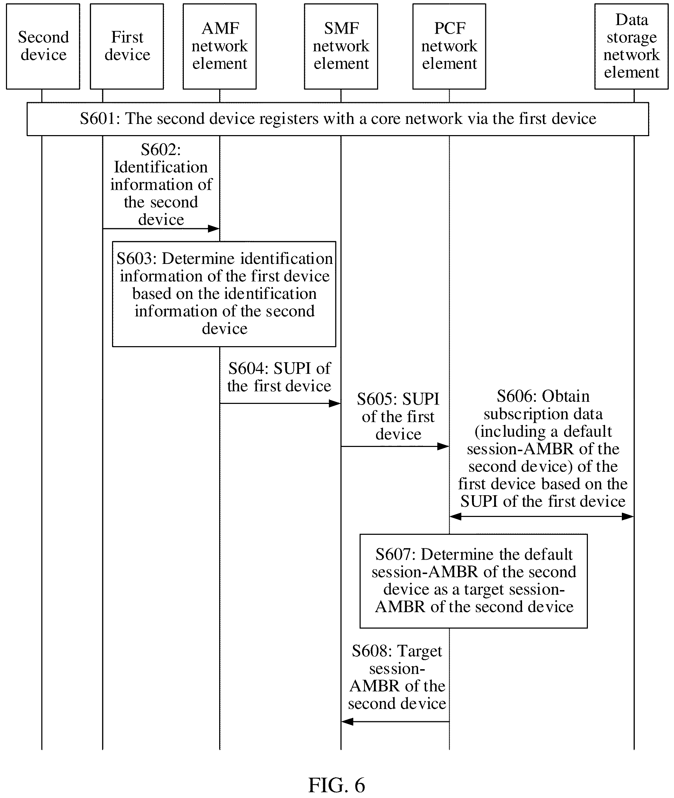

The following describes another communication method provided in an embodiment of this application. Refer to FIG. 6. FIG. 6 is an interaction diagram of still another communication method according to an embodiment of this application. The method embodiment in FIG. 6, may correspond to the second possible implementation (executed by the PCF network element) of obtaining the subscription data of the first device in step S301. In this embodiment of this application, a first device, a second device, a first core network element, a second core network element, a third core network element, and a fourth core network element may be used as execution bodies of the interaction example to describe the method. In this embodiment, an example in which the first core network element is an SMF network element, the second core network element is a data storage network element, the third core network element is an AMF network element, the fourth core network element is a PCF network element, and a maximum bit rate is a session-AMBR/UE-slice-MBR (the session-AMBR is used as an example below) is used for description. As shown in FIG. 6, the communication method may include at least the following steps.

Steps S601 to S604 correspond to steps S401 to S404. For related descriptions of S601 to S604, refer to the foregoing descriptions of S401 to S404. Details are not described herein again.

S605: The SMF network element sends the SUPI of the first device to the PCF network element. Correspondingly, the PCF network element receives the SUPI of the first device from the SMF network element.

After receiving the SUPI of the first device from the AMF network element, the SMF network element may send the SUPI of the first device to the PCF network element. In a possible implementation, the SMF network element may send a first request to the PCF network element, where the first request includes the SUPI of the first device.

Further, optionally, the first request may further include indication information, and the indication information indicates the PCF network element to determine the target session-AMBR of the second device.

S606: The PCF network element obtains subscription data of the first device from the data storage network element based on the SUPI of the first device, where the subscription data of the first device includes a default session-AMBR of the second device.

After receiving the SUPI of the first device from the SMF network element, the PCF network element may obtain the subscription data of the first device from the data storage network element based on the SUPI of the first device. For example, the PCF network element may send a data management query (data management query, DM Query) to the data storage network element to obtain the subscription data of the first device. The subscription data of the first device may include the default session-AMBR of the second device.

For an implementation of the subscription data of the first device, refer to the descriptions in step S405. Details are not described again.

S607: The PCF network element determines the default session-AMBR of the second device as the target session-AMBR of the second device.

After obtaining the subscription data of the first device, the PCF network element may determine the default session-AMBR of the second device in the subscription data of the first device as the target session-AMBR of the second device.

S608: The PCF network element sends the target session-AMBR of the second device to the SMF network element. Correspondingly, the SMF network element receives the target session-AMBR of the second device from the PCF network element.

After determining the target session-AMBR of the second device, the PCF network element may send the target session-AMBR of the second device to the SMF network element. Further, optionally, after receiving the target session-AMBR of the second device from the PCF network element, the SMF network element may send the target session-AMBR of the second device to a W-AGF and a UPF network element, to control a data rate of a session.

A difference between this embodiment and steps S401 to S406 in FIG. 4 lies in that: In FIG. 4, the SMF network element may obtain the subscription data of the first device, and determine the target session-AMBR of the second device based on the subscription data of the first device. In this embodiment, the PCF network element may obtain the subscription data of the first device, and determine the target session-AMBR of the second device based on the subscription data of the first device.

In this embodiment, the subscription data of the first device includes the default session-AMBR of the second device. The default session-AMBR of the second device is determined as the target session-AMBR of the second device, so that the target session-AMBR of the second device can be determined based on the subscription data of the first device. A proper first maximum bit rate may be determined for the second device based on the subscription data of the first device, so that a target maximum bit rate of the second device does not exceed a first maximum bit rate of the first device, thereby standardizing session establishment. This can avoid a problem that data cannot be transmitted after a session is established for the second device, thereby improving session establishment accuracy.

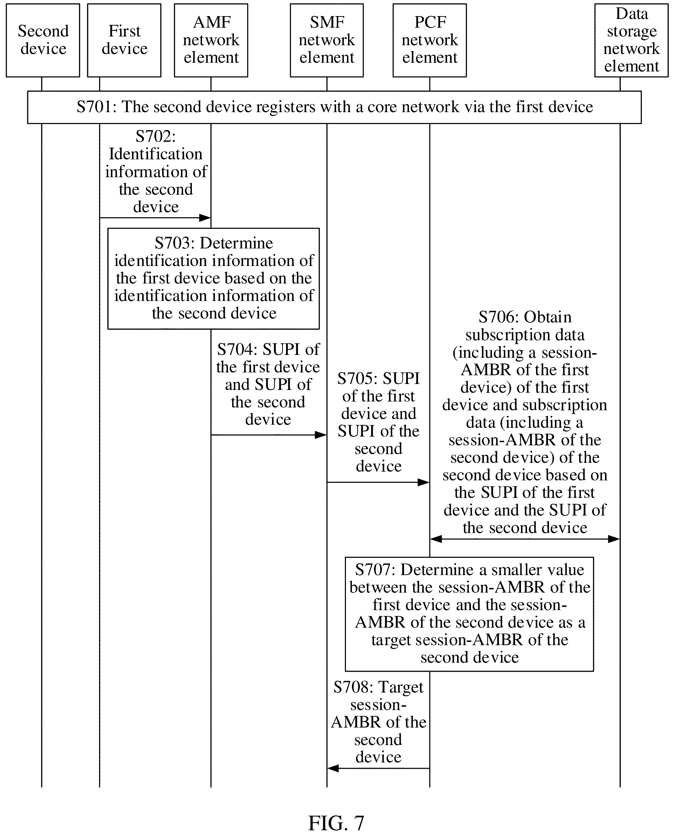

The following describes still another communication method provided in an embodiment of this application. Refer to FIG. 7. FIG. 7 is an interaction diagram of still another communication method according to an embodiment of this application. The method embodiment in FIG. 7, may correspond to the second possible implementation (executed by the PCF network element) of obtaining the subscription data of the first device in step S301. In this embodiment of this application, a first device, a second device, a first core network element, a second core network element, a third core network element, and a fourth core network element may be used as execution bodies of the interaction example to describe the method. In this embodiment, an example in which the first core network element is an SMF network element, the second core network element is a data storage network element, the third core network element is an AMF network element, the fourth core network element is a PCF network element, and a maximum bit rate is a session-AMBR/UE-slice-MBR (the session-AMBR is used as an example below) is used for description. As shown in FIG. 7, the communication method may include at least the following steps.

Steps S701 to S703 correspond to steps S401 to S403. For related descriptions of S701 to S703, refer to the foregoing descriptions of S401 to S403. Step S704 corresponds to step S504. For related descriptions of S704, refer to the foregoing descriptions of S504. Details are not described herein again.

S705: The SMF network element sends the SUPI of the first device and the SUPI of the second device to the PCF network element. Correspondingly, the PCF network element receives the SUPI of the first device and the SUPI of the second device from the SMF network element.

After receiving the SUPI of the first device and the SUPI of the second device from the AMF network element, the SMF network element may send the SUPI of the first device and the SUPI of the second device to the PCF network element. In a possible implementation, the SMF network element may send a first request to the PCF network element, where the first request includes the SUPI of the first device and the SUPI of the second device.

Further, optionally, the first request may further include indication information, and the indication information indicates the PCF network element to determine the target session-AMBR of the second device.

S706: The PCF network element obtains the subscription data of the first device and subscription data of the second device from the data storage network element based on the SUPI of the first device and the SUPI of the second device, where the subscription data may be session management subscription data or session policy control subscription data, the subscription data of the first device includes a session-AMBR of the first device, and the subscription data of the second device includes a session-AMBR of the second device.

After receiving the SUPI of the first device and the SUPI of the second device from the SMF network element, the PCF network element may obtain the subscription data of the first device and the subscription data of the second device from the data storage network element based on the SUPI of the first device and the SUPI of the second device. For example, the PCF network element may send a DM query to the data storage network element to obtain the subscription data of the first device and the subscription data of the second device. The subscription data of the first device includes the session-AMBR of the first device, and the subscription data of the second device includes the session-AMBR of the second device.

For an implementation of the subscription data of the first device and the subscription data of the second device, refer to the descriptions in step S505. Details are not described again.

S707: The PCF network element determines a smaller value between the session-AMBR of the first device and the session-AMBR of the second device as the target session-AMBR of the second device.

After obtaining the subscription data of the first device and the subscription data of the second device, the PCF network element may compare the session-AMBR of the first device in the subscription data of the first device with the session-AMBR of the second device in the subscription data of the second device, and use the smaller value as the target session-AMBR of the second device.

S708: The PCF network element sends the target session-AMBR of the second device to the SMF network element. Correspondingly, the SMF network element receives the target session-AMBR of the second device from the PCF network element.

Step S708 corresponds to step S608. For related descriptions in S708, refer to the foregoing descriptions in S608. Details are not described herein again.

A difference between this embodiment and steps S501 to S506 in FIG. 5 lies in that: In FIG. 5, the SMF network element may obtain the subscription data of the first device and the subscription data of the second device, and determine the target session-AMBR of the second device based on the subscription data of the first device and the subscription data of the second device. In this embodiment, the PCF network element may obtain the subscription data of the first device and the subscription data of the second device, and determine the target session-AMBR of the second device based on the subscription data of the first device and the subscription data of the second device.

In this embodiment, the subscription data of the first device includes the session-AMBR of the first device, and the subscription data of the second device includes the session-AMBR of the second device. The session-AMBR of the first device is compared with the session-AMBR of the second device, and the smaller value is determined as the target session-AMBR of the second device. In this way, the target session-AMBR of the second device can be determined based on the subscription data of the first device. A proper first maximum bit rate may be determined for the second device based on the subscription data of the first device, so that a target maximum bit rate of the second device does not exceed a first maximum bit rate of the first device, thereby standardizing session establishment. This can avoid a problem that data cannot be transmitted after a session is established for the second device, thereby improving session establishment accuracy.

The following describes still another communication method provided in an embodiment of this application. Refer to FIG. 8. FIG. 8 is an interaction diagram of still another communication method according to an embodiment of this application. Steps S801 to S805, S808, and S809 in the method embodiment in FIG. 8 may correspond to the second possible implementation (executed by the AMF network element) of obtaining the subscription data of the first device in step S301. Steps S801 to S803 and S806 to S809 in the method embodiment in FIG. 8 may correspond to the second possible implementation (executed by the PCF network element) of obtaining the subscription data of the first device in step S301. In this embodiment of this application, a first device, a second device, a second core network element, a third core network element, and a fourth core network element may be used as execution bodies of the interaction example to describe the method. In this embodiment, an example in which the second core network element is a data storage network element, the third core network element is an AMF network element, the fourth core network element is a PCF network element, and a maximum bit rate is a UE-AMBR/UE-slice-MBR (the UE-AMBR is used as an example below) is used for description. As shown in FIG. 8, the communication method may include at least the following steps.

S801: The second device registers with a core network via the first device.

The second device may register with the core network via the first device. The core network may include the AMF network element, an SMF network element, the PCF network element, the data storage network element, and the like. For example, the first device may be a 5G-RG device, and the second device may be an AUN3 device.

It should be noted that, for specific descriptions of the first device and the second device, refer to the foregoing embodiment. Details are not described herein again.

The data storage network element in this embodiment of this application may be a UDM network element or a UDR network element.

S802: The first device sends identification information of the second device to the AMF network element. Correspondingly, the AMF network element receives the identification information of the second device from the first device.

After the second device registers with the core network via the first device, the first device may send the identification information of the second device to the AMF network element, for example, a SUPI or a 5^{th} generation globally unique temporary UE identity (5^{th} generation globally unique temporary UE identity, 5G-GUTI).

S803: The AMF network element determines identification information of the first device based on the identification information of the second device.

After receiving the identification information, for example, the SUPI, of the second device from the first device, the AMF network element may determine the identification information, for example, a SUPI or a 5G-GUTI, of the first device based on the identification information of the second device. Specifically, the AMF network element may obtain a correspondence between the second device and the first device, and determine the identification information of the first device based on the correspondence and the identification information of the second device. The correspondence between the second device and the first device may be locally maintained by the AMF network element, or may be obtained by the AMF network element from the data storage network element.

S804: The AMF network element obtains subscription data of the first device from the data storage network element based on the SUPI of the first device, where the subscription data of the first device includes a default UE-AMBR of the second device.

After determining the identification information of the first device, the AMF network element may obtain the subscription data of the first device from the data storage network element based on the SUPI in the identification information of the first device. The subscription data of the first device may include the default UE-AMBR of the second device. The default UE-AMBR of the second device may be understood as a UE-AMBR that can be used by the second device corresponding to the first device. In other words, UE-AMBRs used by all second devices corresponding to the first device are the same. It should be noted that, if the subscription data of the first device includes the default UE-AMBR of the second device, subscription data of the second device may not include the UE-AMBR.

For example, the subscription data of the first device may be listed in the following table:

| Subscription data type | Field | Description |
|---|---|---|
| User equipment management subscription data | Subscribed UE-AMBR (subscribed-UE-AMBR) | Maximum uplink and downlink MBRs shared by all non-GBR QoS flows of a user |
| | Default UE-MBR of the second device | UE-AMBR that can be used by the second device connected to the first device |

S805: The AMF network element sends the subscription data of the first device to the PCF network element, where the subscription data of the first device includes the default UE-AMBR of the second device. Correspondingly, the PCF network element receives the subscription data of the first device from the AMF network element.

After obtaining the subscription data of the first device from the data storage network element based on the SUPI of the first device, the AMF network element may send the subscription data of the first device to the PCF network element. In a possible implementation, the AMF network element sends a second request to the PCF network element, where the second request is for requesting to determine a target UE-AMBR of the second device, and the second request includes the subscription data of the first device.

S806: The AMF network element sends the SUPI of the first device to the PCF network element. Correspondingly, the PCF network element receives the SUPI of the first device from the AMF network element.

After determining the identification information of the first device, the AMF network element may send the SUPI in the identification information of the first device to the PCF network element. In a possible implementation, the AMF network element sends a second request to the PCF network element, where the second request is for requesting to determine a target UE-AMBR of the second device, and the second request includes the SUPI of the first device.

S807: The PCF network element obtains subscription data of the first device from the data storage network element based on the SUPI of the first device, where the subscription data of the first device includes a default UE-AMBR of the second device.

After receiving the SUPI of the first device from the AMF network element, the PCF network element may obtain the subscription data of the first device from the data storage network element based on the SUPI of the first device. The subscription data of the first device includes the default (default) UE-AMBR of the second device. It should be noted that, the foregoing steps S804 and S805 and steps S806 and S807 are parallel optional steps. To be specific, after performing S803, the AMF network element may perform actions of S804, S805, S808, and S809, or may perform actions of S806 to S809.

S808: The PCF network element determines the default UE-AMBR of the second device as the target UE-AMBR of the second device.

After obtaining the subscription data of the first device, the PCF network element may determine the default UE-AMBR of the second device in the subscription data of the first device as the target UE-AMBR of the second device.

S809: The PCF network element sends the target UE-AMBR of the second device to the AMF network element.

After determining the target UE-AMBR of the second device, the PCF network element may send the target UE-AMBR of the second device to the AMF network element. In a possible implementation, the PCF network element sends a second response to the AMF network element, where the second response is for responding to the second request, and the second response includes the target UE-AMBR of the second device.

Further, optionally, after receiving the target UE-AMBR of the second device from the PCF network element, the AMF network element sends the target UE-AMBR of the second device to the SMF network element. The SMF network element may send the target UE-AMBR of the second device to a W-AGF and a UPF network element, to control a data rate of a session.

In this embodiment, the subscription data of the first device includes the default UE-AMBR of the second device. The default UE-AMBR of the second device is determined as the target UE-AMBR of the second device, so that the target UE-AMBR of the second device can be determined based on the subscription data of the first device. A proper first maximum bit rate may be determined for the second device based on the subscription data of the first device, so that a target maximum bit rate of the second device does not exceed a first maximum bit rate of the first device, thereby standardizing session establishment. This can avoid a problem that data cannot be transmitted after a session is established for the second device, thereby improving session establishment accuracy.

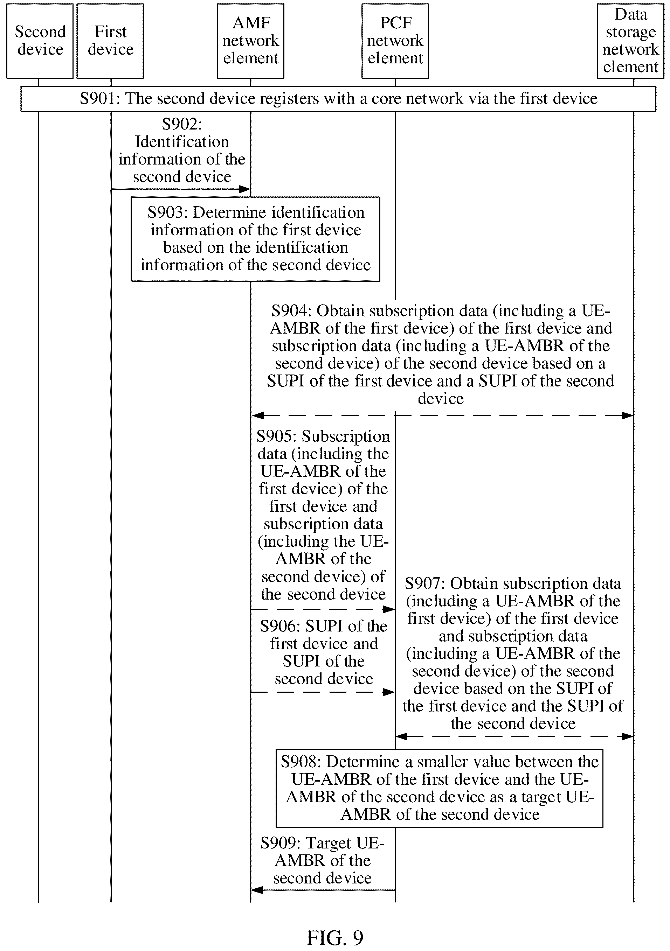

The following describes still another communication method provided in an embodiment of this application. Refer to FIG. 9. FIG. 9 is an interaction diagram of still another communication method according to an embodiment of this application. The method embodiment in FIG. 9, may correspond to the second possible implementation (executed by the PCF network element) of obtaining the subscription data of the first device in step S301. In this embodiment of this application, a first device, a second device, a second core network element, a third core network element, and a fourth core network element may be used as execution bodies of the interaction example to describe the method. In this embodiment, an example in which the second core network element is a data storage network element, the third core network element is an AMF network element, the fourth core network element is a PCF network element, and a maximum bit rate is a UE-AMBR/UE-slice-MBR (the UE-AMBR is used as an example below) is used for description. As shown in FIG. 9, the communication method may include at least the following steps.

Steps S901 to S903 correspond to steps S801 to S803. For related descriptions of S901 to S903, refer to the foregoing descriptions of S801 to S803. Details are not described herein again.

S904: The AMF network element obtains subscription data of the first device and subscription data of the second device from the data storage network element based on the SUPI of the first device and the SUPI of the second device, where the subscription data of the first device includes a UE-AMBR of the first device, and the subscription data of the second device includes a UE-AMBR of the second device.

After determining the identification information of the first device, the AMF network element may obtain the subscription data of the first device and the subscription data of the second device from the data storage network element based on the SUPI in the identification information of the first device and the SUPI in the identification information of the second device. The subscription data of the first device includes the UE-AMBR of the first device, and the subscription data of the second device includes the UE-AMBR of the second device.

For example, the subscription data of the first device may be listed in the following table:

| Subscription data type | Field | Description |
|---|---|---|
| User equipment management subscription data | Subscribed UE-AMBR (subscribed-UE-AMBR) | Maximum uplink and downlink MBRs shared by all non-GBR QoS flows of a user |

For example, the subscription data of the second device may be listed in the following table:

| Subscription data type | Field | Description |
|---|---|---|
| User equipment management subscription data | Subscribed UE-AMBR (subscribed-UE-AMBR) | Maximum uplink and downlink MBRs shared by all non-GBR QoS flows of a user |

It may be understood that, the subscribed UE-AMBR in the foregoing table may correspond to the UE-AMBR in the subscription data of the first device/the second device.

S905: The AMF network element sends the subscription data of the first device and the subscription data of the second device to the PCF network element, where the subscription data of the first device includes the UE-AMBR of the first device, and the subscription data of the second device includes the UE-AMBR of the second device. Correspondingly, the PCF network element receives the subscription data of the first device and the subscription data of the second device from the AMF network element.

After obtaining the subscription data of the first device and the subscription data of the second device, the AMF network element may send the subscription data of the first device and the subscription data of the second device to the PCF. In a possible implementation, the AMF network element sends a second request to the PCF network element, where the second request is for requesting to determine a target UE-AMBR of the second device, and the second request includes the subscription data of the first device and the subscription data of the second device.

S906: The AMF network element sends the SUPI of the first device and the SUPI of the second device to the PCF network element. Correspondingly, the PCF network element receives the SUPI of the first device and the SUPI of the second device from the AMF network element.

After determining the identification information of the first device and the identification information of the second device, the AMF network element may send the SUPI in the identification information of the first device and the SUPI in the identification information of the second device to the PCF network element. In a possible implementation, the AMF network element sends a second request to the PCF network element, where the second request is for requesting to determine a target UE-AMBR of the second device, and the second request includes the SUPI of the first device and the SUPI of the second device.

S907: The PCF network element obtains subscription data of the first device and subscription data of the second device from the data storage network element based on the SUPI of the first device and the SUPI of the second device, where the subscription data of the first device includes a UE-AMBR of the first device, and the subscription data of the second device includes a UE-AMBR of the second device.

After receiving the SUPI of the first device and the SUPI of the second device from the AMF network element, the PCF network element may obtain the subscription data of the first device and the subscription data of the second device from the data storage network element based on the SUPI of the first device and the SUPI of the second device. The subscription data of the first device includes the UE-AMBR of the first device, and the subscription data of the second device includes the UE-AMBR of the second device.

It should be noted that, the foregoing steps S904 and S905 and steps S906 and S907 are parallel optional steps. To be specific, after performing S903, the AMF network element may perform actions of S904, S905, S908, and S909, or may perform actions of S906 to S909.

S908: The PCF network element determines a smaller value between the UE-AMBR of the first device and the UE-AMBR of the second device as the target UE-AMBR of the second device.

After obtaining the subscription data of the first device and the subscription data of the second device, the PCF network element may compare the UE-AMBR of the first device in the subscription data of the first device with the UE-AMBR of the second device in the subscription data of the second device, and use the smaller value as the target UE-AMBR of the second device.

S909: The PCF network element sends the target UE-AMBR of the second device to the AMF network element.

Step S909 corresponds to step S809. For related descriptions in S909, refer to the foregoing descriptions in S809. Details are not described herein again.

In this embodiment, the subscription data of the first device includes the UE-AMBR of the first device, and the subscription data of the second device includes the UE-AMBR of the second device. The UE-AMBR of the first device is compared with the UE-AMBR of the second device, and the smaller value is determined as the target UE-AMBR of the second device. In this way, the target UE-AMBR of the second device can be determined based on the subscription data of the first device. A proper first maximum bit rate may be determined for the second device based on the subscription data of the first device, so that a target maximum bit rate of the second device does not exceed a first maximum bit rate of the first device, thereby standardizing session establishment. This can avoid a problem that data cannot be transmitted after a session is established for the second device, thereby improving session establishment accuracy.

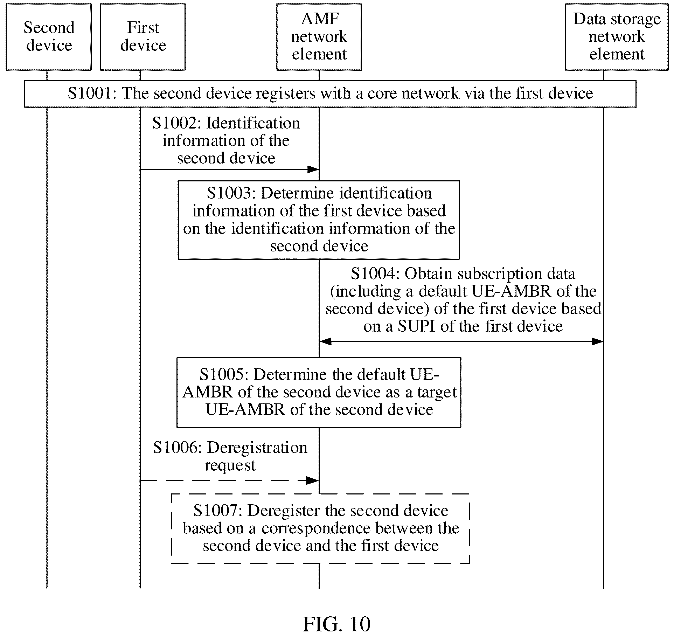

The following describes still another communication method provided in an embodiment of this application. Refer to FIG. 10. FIG. 10 is an interaction diagram of still another communication method according to an embodiment of this application. The method embodiment in FIG. 10, may correspond to the second possible implementation (executed by the AMF network element) of obtaining the subscription data of the first device in step S301. In this embodiment of this application, a first device, a second device, a second core network element, and a third core network element may be used as execution bodies of the interaction example to describe the method. In this embodiment, an example in which the second core network element is a data storage network element, the third core network element is an AMF network element, and a maximum bit rate is a UE-AMBR/UE-slice-MBR (the UE-AMBR is used as an example below) is used for description. As shown in FIG. 10, the communication method may include at least the following steps. Steps S1006 and S1007 are optional steps.

Steps S1001 to S1003 correspond to steps S801 to S803. For related descriptions of S1001 to S1003, refer to the foregoing descriptions of S801 to S803. Details are not described herein again.

S1004: The AMF network element obtains subscription data of the first device from the data storage network element based on the SUPI of the first device, where the subscription data of the first device includes a default UE-AMBR of the second device.

After determining the identification information of the first device, the AMF network element may obtain the subscription data of the first device from the data storage network element based on the SUPI in the identification information of the first device. The subscription data of the first device includes the default UE-AMBR of the second device.

For an implementation of the subscription data of the first device, refer to the descriptions in step S805. Details are not described again.

S1005: The AMF network element determines the default UE-AMBR of the second device as a target UE-AMBR of the second device.

After obtaining the subscription data of the first device, the AMF network element may determine the default UE-AMBR of the second device in the subscription data of the first device as the target UE-AMBR of the second device.

Further, optionally, after determining the target UE-AMBR of the second device, the AMF network element may send the target UE-AMBR of the second device to the SMF network element. The SMF network element may send the target UE-AMBR of the second device to a W-AGF and a UPF network element, to control a data rate of a session.

S1006: The first device sends a deregistration request to the AMF network element. Correspondingly, the AMF network element receives the deregistration request from the first device.

The first device may send the deregistration request to the AMF network element. The deregistration request is for requesting the AMF network element to deregister the first device.

S 1007: The AMF network element deregisters the second device based on the correspondence between the second device and the first device.

After receiving the deregistration request from the first device, or receiving a deregistration request (network initiated deregistration) that is for the first device and that triggered by a network, the AMF network element may deregister the first device based on the deregistration request of the first device. Further, optionally, the AMF network element may further deregister the second device based on the correspondence between the second device and the first device.

Further, optionally, when the AMF network element locally maintains the correspondence between the second device and the first device, the AMF network element may further delete the correspondence between the second device and the first device, to increase local storage space.

A difference between this embodiment and the embodiment shown in FIG. 8 lies in that: In FIG. 8, the PCF network element may obtain the subscription data of the first device, and determine the target UE-AMBR of the second device based on the subscription data of the first device. In this embodiment, the AMF network element may obtain the subscription data of the first device, and determine the target UE-AMBR of the second device based on the subscription data of the first device.

In this embodiment, the subscription data of the first device includes the default UE-AMBR of the second device. The default UE-AMBR of the second device is determined as the target UE-AMBR of the second device, so that the target UE-AMBR of the second device can be determined based on the subscription data of the first device. A proper first maximum bit rate may be determined for the second device based on the subscription data of the first device, so that a target maximum bit rate of the second device does not exceed a first maximum bit rate of the first device, thereby standardizing session establishment. This can avoid a problem that data cannot be transmitted after a session is established for the second device, thereby improving session establishment accuracy.

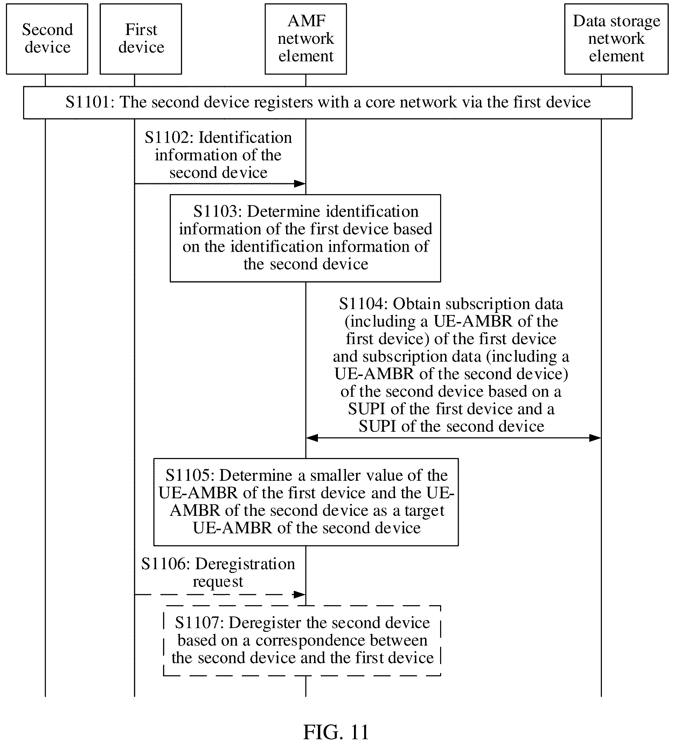

The following describes still another communication method provided in an embodiment of this application. Refer to FIG. 11. FIG. 11 is an interaction diagram of still another communication method according to an embodiment of this application. The method embodiment in FIG. 11, may correspond to the second possible implementation (executed by the AMF network element) of obtaining the subscription data of the first device in step S301. In this embodiment of this application, a first device, a second device, a second core network element, and a third core network element may be used as execution bodies of the interaction example to describe the method. In this embodiment, an example in which the second core network element is a data storage network element, the third core network element is an AMF network element, and a maximum bit rate is a UE-AMBR/UE-slice-MBR (the UE-AMBR is used as an example below) is used for description. As shown in FIG. 11, the communication method may include at least the following steps. Steps S1106 and S1107 are optional steps.

Steps S1101 to S1103 correspond to steps S801 to S803. For related descriptions of S1101 to S1103, refer to the foregoing descriptions of S801 to S803. Details are not described herein again.

S1104: The AMF network element obtains subscription data of the first device and subscription data of the second device from the data storage network element based on the SUPI of the first device and the SUPI of the second device, where the subscription data of the first device includes a UE-AMBR of the first device, and the subscription data of the second device includes a UE-AMBR of the second device.

After determining the identification information of the first device, the AMF network element may obtain the subscription data of the first device and the subscription data of the second device from the data storage network element based on the SUPI in the identification information of the first device and the SUPI in the identification information of the second device. The subscription data of the first device includes the UE-AMBR of the first device, and the subscription data of the second device includes the UE-AMBR of the second device.

For an implementation of the subscription data of the first device and the subscription data of the second device, refer to the descriptions in step S905. Details are not described again.

S1105: The AMF network element determines a smaller value between the UE-AMBR of the first device and the UE-AMBR of the second device as the target UE-AMBR of the second device.

After obtaining the subscription data of the first device and the subscription data of the second device, the AMF network element may compare the UE-AMBR of the first device in the subscription data of the first device with the UE-AMBR of the second device in the subscription data of the second device, and use the smaller value as the target UE-AMBR of the second device.

Further, optionally, after determining the target UE-AMBR of the second device, the AMF network element may send the target UE-AMBR of the second device to the SMF network element. The SMF network element may send the target UE-AMBR of the second device to a W-AGF and a UPF network element, to control a data rate of a session.

Steps S1106 to S1107 correspond to steps S1006 to S1007. For related descriptions of S1106 to S1107, refer to the foregoing descriptions of S1006 to S1007. Details are not described herein again.

A difference between this embodiment and the embodiment shown in FIG. 9 lies in that: In FIG. 9, the PCF network element may obtain the subscription data of the first device and the subscription data of the second device, and determine the target UE-AMBR of the second device based on the subscription data of the first device and the subscription data of the second device. In this embodiment, the AMF network element may obtain the subscription data of the first device and the subscription data of the second device, and determine the target UE-AMBR of the second device based on the subscription data of the first device and the subscription data of the second device.

In this embodiment, the subscription data of the first device includes the UE-AMBR of the first device, and the subscription data of the second device includes the UE-AMBR of the second device. The UE-AMBR of the first device is compared with the UE-AMBR of the second device, and the smaller value is determined as the target UE-AMBR of the second device. In this way, the target UE-AMBR of the second device can be determined based on the subscription data of the first device. A proper first maximum bit rate may be determined for the second device based on the subscription data of the first device, so that a target maximum bit rate of the second device does not exceed a first maximum bit rate of the first device, thereby standardizing session establishment. This can avoid a problem that data cannot be transmitted after a session is established for the second device, thereby improving session establishment accuracy.

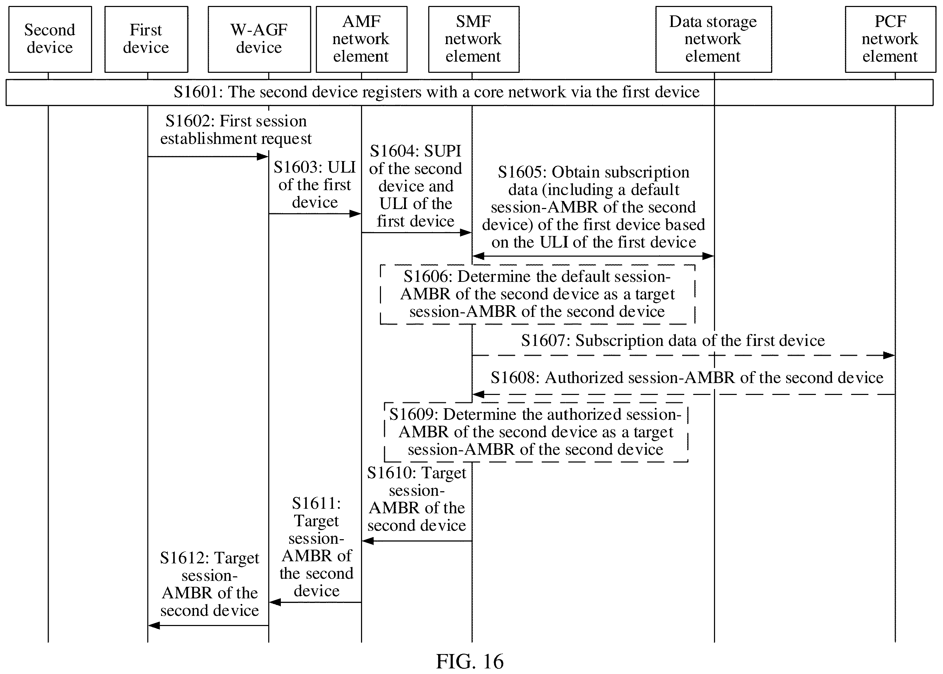

The following describes still another communication method provided in an embodiment of this application. Refer to FIG. 16. FIG. 16 is an interaction diagram of a communication method according to an embodiment of this application. The method embodiment in FIG. 16 may correspond to the third possible implementation (executed by the SMF network element) of obtaining the subscription data of the first device in step S301. In this embodiment of this application, a first device, a second device, a first core network element, a second core network element, a third core network element, and a fourth core network element may be used as execution bodies of the interaction example to describe the method. In this embodiment, an example in which the first core network element is an SMF network element, the second core network element is a data storage network element, the third core network element is an AMF network element, the fourth core network element is a PCF network element, and a maximum bit rate is a session-AMBR is used for description. As shown in FIG. 16, the communication method may include at least the following steps. Steps S1606 to S1609 are optional steps.

S1601: The second device registers with a core network via the first device.

It may be understood that, step S1601 corresponds to step S401. For specific descriptions in step S1601, refer to step S401. Details are not described again. In addition, in a registration procedure, a ULI (for example, a general communication interface (general communication interface, GCI), a general location identifier (general location information, GLI), or a line ID) of the first device may also be sent to the core network.

S1602: The first device sends a first session establishment request to a W-AGF device. Correspondingly, the W-AGF device receives the first session establishment request from the first device.

The first device may send the first session establishment request to the W-AGF device. The first session establishment request is for requesting the SMF network element to establish a session for the second device. For example, the session may be a PDU session.

S1603: The W-AGF device sends the ULI of the first device to the AMF network element. Correspondingly, the AMF network element receives the ULI of the first device from the W-AGF device.

The W-AGF device may send the ULI or the line ID of the first device to the AMF network element. The ULI is used as an example for description below. In a possible implementation, the W-AGF device receives the first session establishment request from the first device, and may send a third session establishment request to the AMF network element to request the SMF network element to establish a session for the second device. The third session establishment request may include the ULI of the first device. It may be understood that because a ULI of the second device is the same as the ULI of the first device, the W-AGF device may alternatively send the ULI of the second device to the AMF network element. In subsequent steps, the ULI of the second device may alternatively be used in a solution implemented by using the ULI of the first device. For example, in step S1605, that the SMF network element obtains the subscription data of the first device from the data storage network element based on the ULI of the first device may alternatively be that the SMF network element obtains the ULI of the second device and obtains the subscription data of the first device from the data storage network element based on the ULI of the second device.

S1604: The AMF network element sends a SUPI of the second device and the ULI of the first device to the SMF network element. Correspondingly, the SMF network element receives the SUPI of the second device and the ULI of the first device from the AMF network element.

The AMF network element may send the SUPI of the second device and the ULI of the first device to the SMF network element. In a possible implementation, the AMF network element sends a second session establishment request to the SMF network element to request the SMF network element to establish a session for the second device. The second session establishment request includes the SUPI of the second device and the ULI of the first device. Alternatively, the ULI of the first device is not included in the second session establishment request. In other words, the AMF network element sends the ULI of the first device and the second session establishment request together to the SMF network element.

Further, optionally, the second session establishment request may further include indication information, and the indication information indicates the PCF network element to determine a target session-AMBR of the second device.

S1605: The SMF network element obtains the subscription data of the first device from the data storage network element based on the ULI of the first device, where the subscription data of the first device includes a default session-AMBR (for example, a default session-AMBR of AUN3 device) of the second device.

In a possible implementation, the SMF network element may send the ULI of the first device to a UDM network element, and optionally, may further send the SUPI of the second device. The UDM network element obtains a SUPI of the first device from a UDR network element based on the ULI of the first device. It may be understood that, the UDR network element may maintain a mapping relationship between the ULI of the first device and the SUPI of the first device. After receiving the ULI of the first device from the UDM network element, the UDR network element determines the SUPI of the first device based on the mapping relationship and the ULI of the first device, and sends the SUPI of the first device to the UDM network element.

After determining the subscription data of the first device based on the SUPI of the first device, the UDM network element sends the subscription data of the first device to the SMF network element. The subscription data of the first device includes the default session-AMBR of the second device. Optionally, the UDM network element may further feed back subscription data of the second device to the SMF network element based on the SUPI of the second device.

In a possible implementation, the SMF network element may send the ULI of the first device to the UDM network element. The UDM network element performs mapping between the ULI of the first device and the SUPI of the first device, determines the subscription data of the first device based on the SUPI of the first device, and sends the subscription data of the first device to the SMF network element. The subscription data of the first device includes the default session-AMBR of the second device. Optionally, the UDM network element may further feed back subscription data of the second device to the SMF network element based on the SUPI of the second device.

Optionally, the SMF network element may obtain the subscription data of the second device based on the SUPI of the second device. For details, refer to the descriptions of obtaining, by the SMF network element, the subscription data of the second device from the data storage network element based on the SUPI of the second device in step S505. Details are not described again.

It should be noted that, after obtaining the subscription data of the first device, the SMF network element may perform step S1606 or steps S1607 to S1609. Steps S1607 to S1609 are parallel optional steps of step S1606.

S1606: The SMF network element determines the default session-AMBR of the second device as the target session-AMBR of the second device.

After obtaining the subscription data of the first device, the SMF network element may determine the default session-AMBR of the second device in the subscription data of the first device as the target session-AMBR of the second device.

S1607: The SMF network element sends the subscription data of the first device to the PCF network element. Correspondingly, the PCF network element receives the subscription data of the first device from the SMF network element.

After obtaining the subscription data of the first device, the SMF network element may send the subscription data of the first device to the PCF network element. The subscription data of the first device includes the default session-AMBR of the second device. Optionally, the SUPI of the second device may further be sent. In a possible implementation, the SMF network element may send a first request to the PCF network element. The first request is for requesting a session-related policy of the second device from the PCF network element. For example, the first request may be a policy establishment request. The first request includes the subscription data of the first device, and the subscription data may include the default session-AMBR of the second device.

Further, optionally, the first request may further include indication information, and the indication information indicates the PCF network element to determine the target session-AMBR of the second device. When the second session establishment request includes the indication information, the indication information may be an independent message, or may be a container (the container includes the indication information). The SMF network element may directly forward the indication information in the second session establishment request to the PCF network element. In other words, the indication information may be ciphertext for the SMF network element, and the SMF network element does not read content actually included in the indication information.

Correspondingly, optionally, the SMF network element may send the SUPI, a DNN, and the like in the subscription data of the second device as an input for PCC decision to the PCF network element.

S1608: The PCF network element sends an authorized session-AMBR of the second device to the SMF network element. Correspondingly, the SMF network element receives the authorized session-AMBR of the second device from the PCF network element.

After receiving the subscription data of the first device from the SMF network element, the PCF network element may send the authorized session-AMBR (for example, authorized session-AMBR of AUN3 device) of the second device to the SMF network element based on the default session-AMBR of the second device in the subscription data of the first device, and optionally, may further send the SUPI of the second device. For example, the authorized session-AMBR of the second device is determined based on another input for PCC decision (for example, the SUPI, the DNN, and the like in the subscription data of the second device) and the default session-AMBR of the second device. The SUPI of the second device may enable the SMF network element to determine that the authorized session-AMBR is used by the second device. In a possible implementation, the PCF network element sends a first response to the SMF network element, where the first response is for responding to the first request, and the first response includes the authorized session-AMBR of the second device. Optionally, the first response may further include the SUPI of the second device.

S1609: The SMF network element determines the authorized session-AMBR of the second device as the target session-AMBR of the second device.

The SMF network element receives the authorized session-AMBR of the second device from the PCF network element, and may determine the authorized session-AMBR of the second device as the target session-AMBR of the second device.

Further, optionally, after determining the target session-AMBR of the second device, the SMF network element may send the target session-AMBR of the second device to a UPF network element through an N4 interface, to control a data rate of a session of the second device.

S1610: The SMF network element sends the target session-AMBR of the second device to the AMF network element. Correspondingly, the AMF network element receives the target session-AMBR of the second device from the SMF network element.

After determining the target session-AMBR of the second device, the SMF network element may send the target session-AMBR of the second device to the AMF network element, and optionally, may further send the SUPI of the second device. In a possible implementation, the SMF network element sends a second session establishment response to the AMF network element to respond to the second session establishment request. The second session establishment response includes the target session-AMBR of the second device. Optionally, the second session establishment response may further include the SUPI of the second device.

S1611: The AMF network element sends the target session-AMBR of the second device to the W-AGF device. Correspondingly, the W-AGF device receives the target session-AMBR of the second device from the AMF network element.

The AMF network element may send the target session-AMBR of the second device to the W-AGF device, and optionally, may further send the SUPI of the second device. In a possible implementation, the AMF network element may send a third session establishment response to the W-AGF device to respond to the third session establishment request. The third session establishment response may include the target session-AMBR of the second device. Optionally, the third session establishment response may further include the SUPI of the second device.

S1612: The W-AGF device sends the target session-AMBR of the second device to the first device. Correspondingly, the first device receives the target session-AMBR of the second device from the W-AGF device.

The W-AGF device may send the target session-AMBR of the second device to the first device, and optionally, may further send the SUPI of the second device. In a possible implementation, the W-AGF device may send a first session establishment response to the first device to respond to the first session establishment request. The first session establishment response may include the target session-AMBR of the second device. Optionally, the first session establishment response may further include the SUPI of the second device.

Step S1611 and step S1612 may be understood as that the AMF network element sends the target session-AMBR of the second device and the SUPI of the second device to the first device by using a NAS signaling connection of the second device.

In this embodiment, a third device (the W-AGF device) may provide ULI information of the first device (5G-RG device) to the core network. Because the information may be trusted, the first device may obtain the target session-AMBR of the second device from the core network via the third device (for example, through transparent transmission). A proper first maximum bit rate may be determined for the second device based on the subscription data of the first device, so that a target maximum bit rate of the second device does not exceed a first maximum bit rate of the first device, thereby standardizing session establishment. This can avoid a problem that data cannot be transmitted after a session is established for the second device, thereby improving session establishment accuracy.

In a possible implementation, in the registration procedure in step S1601 or in a registration procedure of the first device, the W-AGF device may obtain a level wireless access characteristic (level wireless access characteristic, LWAC) of the first device from the core network (for example, the AMF network element), and the W-AGF device may determine the LWAC of the first device as a common data flow control parameter (for example, a peak data rate (data rate) for limiting uplink and downlink data transmission) of the first device and all second device connected to the first device. When a session of the second device is subsequently transmitted, the W-AGF device may use the LWAC of the first device to limit a data rate of the session of second device. For example, the first device is a 5G-RG device, and the second device is an AUN3. In a 5G-RG registration procedure, the W-AGF device obtains an LWAC (RG level wireless access characteristic) of the 5G-RG device from the AMF network element. The W-AGF device considers this parameter as a common data flow control parameter (for example, a peak data rate (data rate) for limiting uplink and downlink data transmission) of the 5G-RG and all AUN3s connected to the 5G-RG. When a session of the AUN3 is transmitted subsequently, the W-AGF may limit a data rate of the session of the AUN3 by using this parameter, so that the data rate of the session of the AUN3 does not exceed a data rate of a session of the 5G-RG, thereby standardizing session establishment. This can avoid a problem that data cannot be transmitted after a session is established for the AUN3, thereby improving session establishment accuracy. It should be noted that, the limitation does not mean that the LWAC used by the AUN3 device is equal to the LWAC of the 5G-RG device. The LWAC used by the AUN3 device may be less than or equal to the LWAC of the 5G-RG device.

The following describes apparatus embodiments in embodiments of this application.

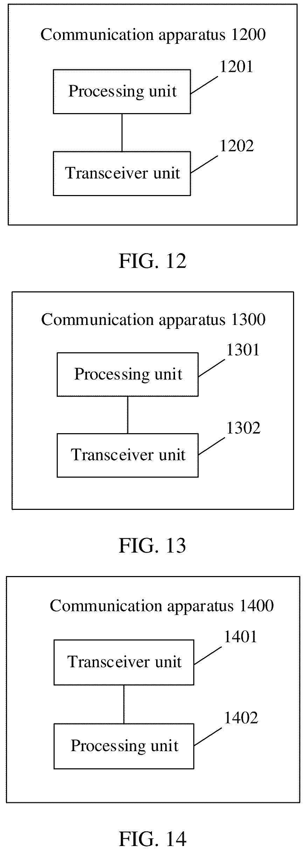

Refer to FIG. 12. FIG. 12 is a diagram of a structure of a communication apparatus according to an embodiment of this application. The apparatus may be a policy control function network element/session management function network element/access and mobility management function network element, or may be an apparatus (for example, a chip, a chip system, or a circuit) in the policy control function network element/session management function network element/access and mobility management function network element. As shown in FIG. 12, the communication apparatus 1200 includes at least a processing unit 1201.

The processing unit 1201 is configured to obtain subscription data of a first device.

The processing unit 1201 is further configured to determine a target maximum bit rate of a second device based on the subscription data of the first device.

**In** an implementation, when obtaining the subscription data of the first device, the processing unit 1201 is specifically configured to obtain the subscription data of the first device from a first core network element.

**In** an implementation, when obtaining the subscription data of the first device, the processing unit 1201 is specifically configured to:
obtain a SUPI of the first device; and
obtain the subscription data of the first device from a second core network element based on the SUPI of the first device.

**In** an implementation, the first maximum bit rate is a session maximum bit rate. When obtaining the SUPI of the first device, the processing unit 1201 is specifically configured to:
receive a first request from a first core network element, where the first request includes the SUPI of the first device.

In an implementation, the first maximum bit rate is a user equipment maximum bit rate. When obtaining the SUPI of the first device, the processing unit 1201 is specifically configured to:
receive a second request from a third core network element, where the second request is for requesting to determine the target maximum bit rate of the second device, and the second request includes the SUPI of the first device.

In an implementation, the first maximum bit rate is a user equipment maximum bit rate. When obtaining the SUPI of the first device, the processing unit 1201 is specifically configured to:
receive a SUPI of the second device; and
obtain the SUPI of the first device based on a correspondence between the second device and the first device.

In an implementation, the subscription data of the first device includes a first maximum bit rate of the first device. The processing unit 1201 is further configured to:
obtain a second maximum bit rate of the second device from the first core network element.

When determining the target maximum bit rate of the second device based on the subscription data of the first device, the processing unit 1201 is specifically configured to:
determine a smaller value between the second maximum bit rate of the second device and the first maximum bit rate of the first device as the target maximum bit rate of the second device.

In an implementation, the first request or the second request further includes a SUPI of the second device. The processing unit 1201 is further configured to:
obtain subscription data of the second device based on the SUPI of the second device, where the subscription data of the second device includes a second maximum bit rate of the second device, where
the subscription data of the first device includes a first maximum bit rate of the first device.

When determining the target maximum bit rate of the second device based on the subscription data of the first device, the processing unit 1201 is specifically configured to:
determine a smaller value between the second maximum bit rate of the second device and the first maximum bit rate of the first device as the target maximum bit rate of the second device.

In an implementation, the subscription data of the first device includes a default second maximum bit rate of the second device, and the default second maximum bit rate of the second device indicates a second maximum bit rate that can be used by the second device.

When determining the target maximum bit rate of the second device based on the subscription data of the first device, the processing unit 1201 is specifically configured to:
use the default second maximum bit rate of the second device as the target maximum bit rate of the second device.

In an implementation, the first core network element is a session management function network element.

In an implementation, the second core network element is a data storage network element.

In an implementation, the third core network element is an access and mobility management function network element.

In an implementation, the first request further includes indication information, and the indication information indicates a fourth core network element to determine the target maximum bit rate of the second device.

In an implementation, the fourth core network element is a policy control function network element.

In an implementation, the communication apparatus 1200 further includes:
a transceiver unit 1202, configured to send the target maximum bit rate of the second device.

For more detailed descriptions of the processing unit 1201 and the transceiver unit 1202, directly refer to related descriptions of the policy control function network element/session management function network element/access and mobility management function network element in the method embodiments shown in FIG. 3 to FIG. 11. Details are not described herein again.

Refer to FIG. 13. FIG. 13 is a diagram of a structure of another communication apparatus according to an embodiment of this application. The apparatus may be an access and mobility management function network element, or may be an apparatus (for example, a chip, a chip system, or a circuit) in the access and mobility management function network element. As shown in FIG. 13, the communication apparatus 1300 includes at least a processing unit 1301 and a transceiver unit 1302.

The processing unit 1301 is configured to: obtain a SUPI of a second device; determine a SUPI of a first device based on a correspondence between the second device and the first device.

The transceiver unit 1302 is configured to send the SUPI of the first device.

In an implementation, when obtaining the SUPI of the second device, the processing unit 1301 is specifically configured to:
receive a first session establishment request from the first device, where the first session establishment request includes the SUPI of the second device.

In an implementation, when sending the SUPI of the first device, the transceiver unit 1302 is specifically configured to:
send a second session establishment request to a first core network element, where the second session establishment request includes the SUPI of the first device and the SUPI of the second device.

In an implementation, when sending the SUPI of the first device, the transceiver unit 1302 is specifically configured to:
send a second request to a fourth core network element, where the second request is for requesting to determine a target maximum bit rate of the second device, the second request includes the SUPI of the first device, and the first maximum bit rate is a user equipment maximum bit rate.

In an implementation, the second session establishment request further includes indication information, the indication information indicates a fourth core network element to determine a target maximum bit rate of the second device, and the first maximum bit rate is a session maximum bit rate.

In an implementation, the first core network element is a session management function network element.

In an implementation, the fourth core network element is a policy control function network element.

In an implementation, the transceiver unit 1302 is further configured to receive the target maximum bit rate of the second device.

In an implementation, the transceiver unit 1302 is further configured to receive a deregistration request of the first device.

The processing unit 1301 is further configured to deregister, based on the deregistration request of the first device, the second device corresponding to the first device.

In an implementation, the processing unit 1301 is further configured to delete the correspondence between the second device and the first device.

For more detailed descriptions of the processing unit 1301 and the transceiver unit 1302, directly refer to related descriptions of the access and mobility management function network element in the method embodiments shown in FIG. 3 to FIG. 11. Details are not described herein again.

Refer to FIG. 14. FIG. 14 is a diagram of a structure of still another communication apparatus according to an embodiment of this application. The apparatus may be a session management function network element, or may be an apparatus (for example, a chip, a chip system, or a circuit) in the session management function network element. As shown in FIG. 14, the communication apparatus 1400 includes at least a transceiver unit 1401.

The transceiver unit 1401 is configured to receive a second session establishment request, where the second session establishment request includes a SUPI of a first device and a SUPI of a second device.

The transceiver unit 1401 is further configured to send a first request, where the first request includes the SUPI of the first device.

In an implementation, the communication apparatus 1400 further includes:
a processing unit 1402, configured to obtain subscription data of the first device from a data storage network element based on the SUPI of the first device, where the subscription data of the first device includes a default second maximum bit rate of the second device.

In an implementation, the processing unit 1402 is further configured to obtain the subscription data of the first device and subscription data of the second device from the data storage network element based on the SUPI of the first device and the SUPI of the second device, where the subscription data of the first device includes a first maximum bit rate of the first device, and the subscription data of the second device includes a second maximum bit rate of the second device.

In an implementation, the transceiver unit 1401 is further configured to send the subscription data of the first device.

In an implementation, the transceiver unit 1401 is further configured to send the subscription data of the second device.

In an implementation, the first request further includes the SUPI of the second device.

In an implementation, the first request further includes indication information, and the indication information indicates a third core network element to determine the second maximum bit rate of the second device.

In an implementation, the second session establishment request further includes indication information, and the indication information indicates a fourth core network element to determine the target maximum bit rate of the second device.

In an implementation, the fourth core network element is a policy control function network element.

In an implementation, the transceiver unit 1401 is further configured to: receive the target maximum bit rate of the second device; and send the target maximum bit rate of the second device.

For more detailed descriptions of the transceiver unit 1401 and the processing unit 1402, directly refer to related descriptions of the session management function network element in the method embodiments shown in FIG. 3 to FIG. 11. Details are not described herein again.

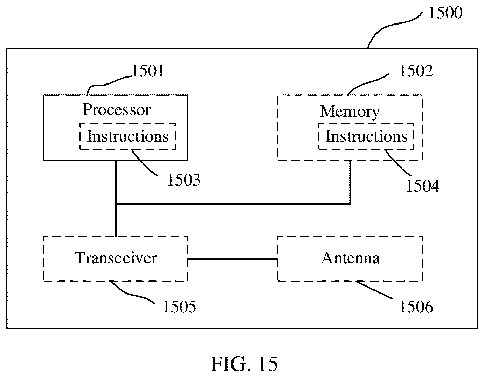

Refer to FIG. 15. FIG. 15 is a diagram of a structure of still another communication apparatus according to an embodiment of this application. As shown in FIG. 15, the apparatus 1500 may include one or more processors 1501. The processor 1501 may also be referred to as a processing unit, and may implement a specific control function. The processor 1501 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 1501 may further store instructions 1503, and the instructions 1503 may be run by the processor, to enable the apparatus 1500 to perform the methods described in the foregoing method embodiments.

In another optional design, the processor 1501 may include a transceiver unit configured to implement a receiving function and a sending function. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 1500 may include a circuit, and the circuit may implement the sending, receiving, or communication function in the foregoing method embodiments.

Optionally, the apparatus 1500 may include one or more memories 1502. The memory 1502 may store instructions 1504, and the instructions may be run on the processor, so that the apparatus 1500 performs the methods described in the foregoing method embodiments. Optionally, the memory may further store data. Optionally, the processor may also store instructions and/or data. The processor and the memory may be separately disposed, or may be integrated together. For example, the correspondence described in the foregoing method embodiment may be stored in the memory or stored in the processor.

Optionally, the apparatus 1500 may further include a transceiver 1505 and/or an antenna 1506. The processor 1501 may be referred to as a processing unit, and control the apparatus 1500. The transceiver 1505 may be referred to as a transceiver unit, a transceiver machine, a transceiver circuit, a transceiver apparatus, a transceiver module, or the like, and is configured to implement sending and receiving functions.

Optionally, the apparatus 1500 in this embodiment of this application may be configured to perform the methods described in FIG. 3 to FIG. 11 in embodiments of this application.

In an embodiment, the communication apparatus 1500 may be a policy control function network element, or may be an apparatus (for example, a chip, a chip system, or a circuit) in the policy control function network element. When computer program instructions stored in the memory 1502 are executed, the processor 1501 is configured to control the processing unit 1201 to perform the operations performed in the foregoing embodiment. The transceiver 1505 is configured to perform the operations performed by the transceiver unit 1202 in the foregoing embodiment. The transceiver 1505 is further configured to send information to a communication apparatus other than the communication apparatus. The policy control function network element or the apparatus in the policy control function network element may be further configured to perform the methods performed by the policy control function network element in the method embodiments in FIG. 3 to FIG. 11. Details are not described again.

In an embodiment, the communication apparatus 1500 may be an access and mobility management function network element, or may be an apparatus (for example, a chip, a chip system, or a circuit) in the access and mobility management function network element. When computer program instructions stored in the memory 1502 are executed, the processor 1501 is configured to control the processing unit 1201 to perform the operations performed in the foregoing embodiment, or is configured to control the processing unit 1301 to perform the operations performed in the foregoing embodiment. The transceiver 1505 is configured to perform the operations performed by the transceiver unit 1202 in the foregoing embodiment, or is configured to perform the operations performed by the transceiver unit 1302 in the foregoing embodiment. The transceiver 1505 is further configured to send information to a communication apparatus other than the communication apparatus. The access and mobility management function network element or the apparatus in the access and mobility management function network element may be further configured to perform the methods performed by the access and mobility management function network element in the method embodiments in FIG. 3 to FIG. 11. Details are not described again.

In an embodiment, the communication apparatus 1500 may be a session management function network element, or may be an apparatus (for example, a chip, a chip system, or a circuit) in the session management function network element. When computer program instructions stored in the memory 1502 are executed, the processor 1501 is configured to control the processing unit 1201 to perform the operations performed in the foregoing embodiment, or is configured to control the processing unit 1402 to perform the operations performed in the foregoing embodiment. The transceiver 1505 is configured to perform the operations performed by the transceiver unit 1202 in the foregoing embodiment, or is configured to perform the operations performed by the transceiver unit 1401 in the foregoing embodiment. The transceiver 1505 is further configured to send information to a communication apparatus other than the communication apparatus. The session management function network element or the apparatus in the session management function network element may be further configured to perform the methods performed by the session management function network element in the method embodiments in FIG. 3 to FIG. 11. Details are not described again.

The processor and the transceiver described in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiments may be a network device or a terminal device. However, the scope of the apparatus described in this application is not limited thereto, and a structure of the apparatus may not be limited by that in FIG. 15. The apparatus may be an independent device, or may be a part of a larger device. For example, the apparatus may be:
(1) an independent integrated circuit IC, a chip, or a chip system or subsystem;
(2) a set of one or more ICs, where optionally, the IC set may also include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

An embodiment of this application further provides a computer-readable storage medium, and the computer-readable storage medium stores a computer program. When the program is executed by the processor, a procedure related to the first device in the communication method provided in the foregoing method embodiments may be implemented.

An embodiment of this application further provides a computer-readable storage medium, and the computer-readable storage medium stores a computer program. When the program is executed by the processor, a procedure related to the second device in the communication method provided in the foregoing method embodiments may be implemented.

An embodiment of this application further provides a computer-readable storage medium, and the computer-readable storage medium stores a computer program. When the program is executed by a processor, a procedure related to the core network element in the communication method provided in the foregoing method embodiments may be implemented.

An embodiment of this application further provides a computer program product. When the computer program product is run on a computer or a processor, the computer or the processor is enabled to perform one or more steps in any one of the foregoing communication methods. When the foregoing modules in the device are implemented in a form of a software functional unit and sold or used as an independent product, the modules may be stored in a computer-readable storage medium.

An embodiment of this application further provides a chip system, including at least one processor and a communication interface. The communication interface and the at least one processor are interconnected through a line. The at least one processor is configured to run a computer program or instructions to perform some or all steps recorded in the method embodiments corresponding to FIG. 3 to FIG. 11. The chip system may include a chip, or may include a chip and another discrete component.

An embodiment of this application further discloses a communication system. The system includes a first device, a second device, and a core network element. For specific descriptions, refer to the communication methods shown in FIG. 3 to FIG. 11.

It should be understood that, the memory mentioned in embodiments of this application may be a volatile memory or a non-volatile memory, or may include both a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

It should be further understood that, the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that, when the processor is a general purpose processor, a DSP, an ASIC, an FPGA or another programmable logic device, a discrete gate, a transistor logic device, or a discrete hardware component, the memory (a storage module) is integrated into the processor.

It should be noted that, the memory described in this specification aims to include but is not limited to these memories and any memory of another proper type.

It should be understood that, sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that, the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

A sequence of the steps of the method in embodiments of this application may be adjusted, combined, or removed based on an actual requirement.

The modules/units in the apparatus in embodiments of this application may be combined, divided, and removed based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, comprising:
obtaining subscription data of a first device; and
determining a target maximum bit rate of a second device based on the subscription data of the first device.

2. The method according to claim 1, wherein the obtaining the subscription data of the first device comprises:
obtaining the subscription data of the first device from a first core network element.

3. The method according to claim 1, wherein obtaining the subscription data of the first device comprises:
obtaining a user location identifier ULI of the first device or the second device; and
obtaining the subscription data of the first device from a second core network element based on the ULI of the first device or the second device.

4. The method according to claim 3, wherein the obtaining the ULI of the first device comprises:
receiving the ULI of the first device from a third core network element.

5. The method according to claim 1, wherein the obtaining the subscription data of the first device comprises:
obtaining a subscription permanent identifier SUPI of the first device; and
obtaining the subscription data of the first device from a second core network element based on the SUPI of the first device.

6. The method according to claim 5, wherein the target maximum bit rate is a session maximum bit rate, and the obtaining the SUPI of the first device comprises:
receiving a first request from a first core network element, wherein the first request comprises the SUPI of the first device.

7. The method according to claim 5, wherein the target maximum bit rate is a user equipment maximum bit rate, and the obtaining the SUPI of the first device comprises:
receiving a second request from a third core network element, wherein the second request is for requesting to determine the target maximum bit rate of the second device, and the second request comprises the SUPI of the first device.

8. The method according to claim 5, wherein the target maximum bit rate is a user equipment maximum bit rate, and the obtaining the SUPI of the first device comprises:
receiving a SUPI of the second device; and
obtaining the SUPI of the first device based on a correspondence between the second device and the first device.

9. The method according to claim 2, wherein the subscription data of the first device comprises a first maximum bit rate of the first device, and the method further comprises:
obtaining a second maximum bit rate of the second device from the first core network element; and
the determining the target maximum bit rate of the second device based on the subscription data of the first device comprises:
determining a smaller value between the second maximum bit rate of the second device and the first maximum bit rate of the first device as the target maximum bit rate of the second device.

10. The method according to claim 6 or 7, wherein the first request or the second request further comprises a SUPI of the second device, and the method further comprises:
obtaining subscription data of the second device based on the SUPI of the second device, wherein the subscription data of the second device comprises a second maximum bit rate of the second device, wherein
the subscription data of the first device comprises a first maximum bit rate of the first device; and
the determining the target maximum bit rate of the second device based on the subscription data of the first device comprises:
determining a smaller value between the second maximum bit rate of the second device and the first maximum bit rate of the first device as the target maximum bit rate of the second device.

11. The method according to any one of claims 2 to 4, 6, or 7, wherein the subscription data of the first device comprises a default second maximum bit rate of the second device, and the default second maximum bit rate of the second device indicates a second maximum bit rate available for use by the second device; and
the determining the target maximum bit rate of the second device based on the subscription data of the first device comprises:
using the default second maximum bit rate of the second device as the target maximum bit rate of the second device.

12. The method according to claim 3 or 4, wherein the method further comprises:
sending the subscription data of the first device to a fourth core network element, wherein the subscription data of the first device comprises a default second maximum bit rate of the second device; and
receiving an authorized second maximum bit rate of the second device from the fourth core network element; and
the determining the target maximum bit rate of the second device based on the subscription data of the first device comprises:
using the authorized second maximum bit rate of the second device as the target maximum bit rate of the second device.

13. The method according to claim 2, 6, or 9, wherein the first core network element is a session management function network element.

14. The method according to claim 5, wherein the second core network element is a data storage network element.

15. The method according to claim 7, wherein the third core network element is an access and mobility management function network element.

16. The method according to claim 6, 10, or 11, wherein the first request further comprises indication information, and the indication information indicates a fourth core network element to determine the target maximum bit rate of the second device.

17. The method according to claim 12 or 16, wherein the fourth core network element is a policy control function network element.

18. A communication method, comprising:
determining an identifier of a first device; and
sending the identifier of the first device.

19. The method according to claim 18, wherein the identifier of the first device is a subscription permanent identifier SUPI of the first device, and the determining the identifier of the first device comprises:
obtaining a SUPI of a second device; and
determining the SUPI of the first device based on a correspondence between the second device and the first device.

20. The method according to claim 18, wherein the identifier of the first device is a user location identifier ULI of the first device, and the determining the identifier of the first device comprises:
receiving the ULI of the first device from a W-AGF device.

21. The method according to claim 18, wherein the identifier of the first device is a user location identifier ULI of the first device, and the determining the identifier of the first device comprises:
receiving a ULI of a second device from a W-AGF device; and
determining the ULI of the first device based on the ULI of the second device.

22. The method according to claim 19, wherein obtaining the SUPI of the second device comprises:
receiving a first session establishment request from the first device, wherein the first session establishment request comprises the SUPI of the second device.

23. The method according to any one of claims 18 to 22, wherein the sending the SUPI of the first device comprises:
sending a second session establishment request to a first core network element, wherein the second session establishment request comprises the SUPI of the first device and the SUPI of the second device.

24. The method according to any one of claims 18 to 22, wherein the sending the SUPI of the first device comprises:
sending a second request to a fourth core network element, wherein the second request is for requesting to determine a target maximum bit rate of the second device, the second request comprises the SUPI of the first device, and the first maximum bit rate is a user equipment maximum bit rate.

25. The method according to claim 23, wherein the second session establishment request further comprises indication information, the indication information indicates a fourth core network element to determine a target maximum bit rate of the second device, and the first maximum bit rate is a session maximum bit rate.

26. A communication method, comprising:
receiving a user location identifier ULI of a first device or a second device;
determining a subscription permanent identifier SUPI of the first device based on the ULI of the first device or the second device; and
sending subscription data of the first device based on the SUPI of the first device.

27. The method according to claim 26, wherein there is a mapping relationship between the ULI of the first device or the second device and the SUPI of the first device, and the determining the SUPI of the first device based on the ULI of the first device or the second device comprises:
determining the SUPI of the first device based on the ULI of the first device or the second device and the mapping relationship between the ULI of the first device and the SUPI of the first device.

28. A communication method, comprising:
sending, by a session management function network element, subscription data of a first device to a policy control function network element; and
determining, by the policy control function network element, a target maximum bit rate of a second device based on the subscription data of the first device.

29. The method according to claim 28, wherein the target maximum bit rate is a target session maximum bit rate.

30. The method according to claim 28 or 29, wherein the subscription data of the first device comprises a default second maximum bit rate of the second device, and the default second maximum bit rate of the second device indicates a second maximum bit rate available for use by the second device; and
the determining, by the policy control function network element, the target maximum bit rate of the second device based on the subscription data of the first device comprises:
using, by the policy control function network element, the default second maximum bit rate of the second device as the target maximum bit rate of the second device.

31. The method according to claim 28 or 29, wherein the subscription data of the first device comprises a first maximum bit rate of the first device, and the method further comprises:
sending, by the session management function network element, subscription data of the second device to the policy control function network element, wherein the subscription data of the second device comprises a second maximum bit rate of the second device; and
the determining, by the policy control function network element, the target maximum bit rate of the second device based on the subscription data of the first device comprises:
determining, by the policy control function network element, a smaller value between the second maximum bit rate of the second device and the first maximum bit rate of the first device as the target maximum bit rate of the second device.

32. The method according to any one of claims 28 to 31, wherein the method further comprises:
sending, by an access and mobility management function network element, a subscription permanent identifier SUPI of the first device to the session management function network element; and
obtaining, by the session management function network element, the subscription data of the first device from a data storage network element based on the SUPI of the first device.

33. The method according to claim 32, wherein the method further comprises:
sending, by the access and mobility management function network element, a SUPI of the second device to the session management function network element; and
obtaining, by the session management function network element, the subscription data of the second device from the data storage network element based on the SUPI of the second device.

34. The method according to any one of claims 28 to 33, wherein the method further comprises:
sending, by the first device, the SUPI of the second device to the access and mobility management function network element; and
determining, by the access and mobility management function network element, the SUPI of the first device based on a correspondence between the second device and the first device.

35. The method according to any one of claims 28 to 34, wherein the method further comprises:
sending, by the policy control function network element, the target maximum bit rate of the second device to the session management function network element.

36. A communication apparatus, comprising a processor, wherein the processor is configured to execute a computer program or instructions in a memory; and when the computer program or the instructions are executed by the processor, the apparatus is enabled to perform the method according to any one of claims 1 to 17, perform the method according to any one of claims 18 to 25, perform the method according to claim 26 or 27, or perform the method according to any one of claims 28 to 35.

37. The apparatus according to claim 36, wherein the communication apparatus further comprises the memory.

38. A computer-readable storage medium, wherein the computer-readable storage medium stores a computer program or computer instructions; and when the computer program or the computer instructions are executed by a processor, the method according to any one of claims 1 to 17, the method according to any one of claims 18 to 25, the method according to claim 26 or 27, or the method according to any one of claims 28 to 35 is implemented.

39. A computer program product comprising program instructions, wherein when the program instructions are run on a computer, the method according to any one of claims 1 to 17, the method according to any one of claims 18 to 25, the method according to claim 26 or 27, or the method according to any one of claims 28 to 35 is implemented.

40. A chip system, comprising at least one processor, a memory, and an interface circuit, wherein the memory, the interface circuit, and the at least one processor are interconnected through a line; the at least one memory stores instructions; and when the instructions are executed by the processor, the method according to any one of claims 1 to 17, the method according to any one of claims 18 to 25, the method according to claim 26 or 27, or the method according to any one of claims 28 to 35 is implemented.
